# EUROPEAN PATENT SPECIFICATION

(11) **EP 4 087 754 B1**
(45) Date of publication and mention of the grant of the patent: **17.09.2025**
(21) Application number: 21702046.0
(22) Date of filing: 03.02.2021
(51) Int. Cl.: B60L 53/51, B60L 53/52, B60L 53/53, B60L 53/65, B60L 53/67, B64C 39/02, B64U 10/14, B60L 53/66

(54) **AUTONOMOUS BASE STATION AND NETWORK FOR UNMANNED VEHICLES**
AUTONOME BASISSTATION UND NETZWERK FÜR UNBEMANNTE FAHRZEUGE
STATION DE BASE AUTONOME ET RÉSEAU POUR DES VÉHICULES SANS PILOTE

(30) Priority: 10.02.2020 LU 101636
(43) Date of publication of application: 16.11.2022
(73) Proprietor: Luxembourg Institute of Science and Technology, 4362 Esch/Alzette (LU)
(72) Inventor: MAHJRI, Imen, 4362 Esch/Alzette (LU)
(74) Representative: Marks & Clerk LLP
(86) International application number: PCT/EP2021/052499
(87) International publication number: WO 2021/160484

(56) References cited:
- WO-A1-2018/227153
- US-A1- 2013 081 245
- US-A1- 2018 292 844
- US-A1- 2019 114 564
- US-A1- 2020 031 497
- US-B2- 9 540 104

## Description

### FIELD OF INVENTION

The present invention relates to an autonomous base station for unmanned vehicles, to a network of such bases stations, and to methods of controlling unmanned vehicle activity with same.

### BACKGROUND TO INVENTION

Remotely-operated unmanned vehicles are frequently used for information gathering and monitoring purposes both in military and civilian contexts, where local human presence and control is either undesirable or impractical. In particular, unmanned aerial vehicles ('UAVs') also colloquially referred to as 'drones', are gaining in popularity for an ever-wider array of military and civilian missions, due to a combination of flight characteristics unconstrained by human limits, and trivial manufacturing and operating costs relative to full-sized fixed-wing or rotor-wing manned aircrafts. UAVs are ideally suited for ad hoc deployment and carrying low- to high-risk missions, such as aerial photography, terrain mapping, environmental monitoring, rescue missions and disaster monitoring.

Some large military UAVs are known to provide a substantially global operational range, under human and/or computer-assisted guidance relayed via satellite links. Besides the technical complexity inherent to such substantially real-time satellite links, their non-trivial size and typically fixed-wing configuration still require the use of permanent and onerous infrastructure like airstrips. Comparatively smaller UAVs, notably as used by civilian security forces and even hobbyists, are typically configured with a short- or vertical-take-off-and-landing ('STOL', 'VTOL') capacity, which facilitates their transport and deployment ad hoc. However, such smaller UAVs exhibit comparably much shorter operational ranges, typically constrained to a local area corresponding to the data communication range of their human operator's remote control device, with an operational endurance of minutes up to an hour or so of flight time.

Artificial Intelligence-based techniques are beginning to emerge for implementing autonomous control in unmanned vehicles, transitioning their operating mode from an analogue input-based motion control model towards a digital input-based, goal-oriented motion control model, which could increase the operational range of unmanned vehicles beyond the data communication range of their human-actuated remote control device, besides augmenting their mission modularity and capacity. Research is presently ongoing in the field of autonomous control of small- to medium-sized UAVs combining one or more exproprioceptive sensors, for example Intel^{®} RealSense^{®} stereoscopic cameras and their associated interpretive software, with an embedded neural network platform, for instance as implemented by nVidia^{®} in its Jetson^{®} software.

US 2013/081245 A1 generally relates to a vehicle base station which comprises a platform for loading material on one or more autonomous vehicles such as an unmanned aerial vehicle (UAV) or the like, a first battery bay located on a first side of the platform, a battery replacement assembly to remove a battery from the vehicle and to replace the battery with a new battery, and a power source adapted to provide power to the vehicle while the vehicle is positioned on the platform. The vehicle base station may also comprise a controller and a sensor system. The controller may be configured to receive sensor data from number of UAVs and to generate information from sensor data. Information may then be sent to a location remote to UAV base station which may include a mission planning system or a human operator. Sensor system generates sensor data from environment. Sensor data may be sent to a location remote to UAV base station or may be used to send commands to number of UAVs.

WO 2018/227153 A1 generally relates to a drone apparatus comprising: a non-transitory computer readable medium configured to store executable programmed modules; a processor communicatively coupled with the non-transitory computer readable medium configured to execute programmed modules stored therein; a flight system configured to control the drone apparatus to take off, fly and land; a communication system configured to wirelessly communicate with a control centre server; a sensor system configured to sense information about a local environment of the drone apparatus; an analysis module stored in the non-transitory computer readable medium and configured to be executed by the processor, the analysis module configured to analyse sensed information about the local environment and provide at least a portion of the sensed information to the control centre server via the communication system; a speaker configured to provide audio to the local environment, wherein the provided audio is stored in the non-transitory computer readable medium or received from the control centre server via the communication system. The drone apparatus also comprises one or more recharging terminals electrically coupled with an energy storage system, wherein the energy storage system to provide power to the drone apparatus.

However such research has yet to yield truly-autonomous control of unmanned vehicles, because it fails to address a critical factor in drone-based activity, namely their mission endurance which, in this day and age, still remains dependent upon human ad hoc interaction for drone transporting, power recharging and controlling. It is therefore desirable to provide a drone-based information gathering and monitoring solution, with enhanced autonomy of operation and control.

### SUMMARY OF INVENTION

The present invention aims to provide an automated monitoring platform based upon autonomous base stations connected to drones, in particular unmanned aerial vehicles ('UAVs') due to their high operational versatility, all operating as a closed but distributed system in which semi- or fully-autonomous drones communicate sensed environmental data to the base stations, maintain an operational level of power at the base stations, and may be mission-tasked by the base stations, thus requiring minimal user input or intervention in use.

According to a first aspect of the invention therefore, there is provided an autonomous base station for UAVs, comprising at least one landing surface for at least one UAV, configured with at least one power transfer bus for supplying power to a power source of the unmanned aerial vehicle ; at least one networking module ; data processing means operably connected to, and configured to control, the or each power transfer bus and the or each networking module, wherein the data processing means is further operably connected to the or each UAV through the at least one networking module, and further configured to receive, store and process data from the or each UAV ; and a power supply operably connected to the or each power transfer bus, the or each networking module and the data processing means.

The power transfer bus in the autonomous base station of the invention advantageously replaces the human-based logistical component inherent to the operation of an unmanned vehicle, insofar as powering up the drone is concerned. The networking module in the autonomous base station of the invention advantageously permits data remotely generated at the unmanned vehicle, e.g. external data captured by one or more sensor(s) in the environment adjacent the drone and/or internal control or status data generated by the drone's operational system, to be downloaded, stored and processed by the base station's

However such research has yet to yield truly-autonomous control of unmanned vehicles, because it fails to address a critical factor in drone-based activity, namely their mission endurance which, in this day and age, still remains dependent upon human ad hoc interaction for drone transporting, power recharging and controlling. It is therefore desirable to provide a drone-based information gathering and monitoring solution, with enhanced autonomy of operation and control.

### SUMMARY OF INVENTION

The present invention aims to provide an automated monitoring platform based upon autonomous base stations connected to drones, in particular unmanned aerial vehicles ('UAVs') due to their high operational versatility, all operating as a closed but distributed system in which semi- or fully-autonomous drones communicate sensed environmental data to the base stations, maintain an operational level of power at the base stations, and may be mission-tasked by the base stations, thus requiring minimal user input or intervention in use.

According to a first aspect of the invention therefore, there is provided an autonomous base station for UAVs as set forth in appended claim 1.

The power transfer bus in the autonomous base station of the invention advantageously replaces the human-based logistical component inherent to the operation of an unmanned vehicle, insofar as powering up the drone is concerned. The networking module in the autonomous base station of the invention advantageously permits data remotely generated at the unmanned vehicle, e.g. external data captured by one or more sensor(s) in the environment adjacent the drone and/or internal control or status data generated by the drone's operational system, to be downloaded, stored and processed by the base station's own architecture, locally relieving the drone's onboard data storage and processing means from the corresponding data storage and processing overheads. The combination of these technical features results in a self-sustaining, substantially permanent monitoring platform with a monitoring capacity extending beyond the monitoring range of the base station itself, which is particularly advantageous in the case of emergency situations wherein a reliance upon human input and/or intervention would otherwise impede or inhibit that monitoring capacity. Hereafter embodiments refer to embodiments of the present disclosure.

The data processing means is further configured to communicate data, including control data, to the or each UAV. The bilateral communication in this embodiment usefully allows the base-station to replace the human-based decisional component inherent to the operation of an unmanned vehicle, insofar as controlling the drone motion is concerned. For instance, data uploaded by a base station to a drone may include a machine-readable file encoding a travel path e.g. as set of waypoints to be followed by the drone's flight controller for performing part or all of a monitoring task or mission Such tasking instructions may be augmented by environmental data such as wind and/or other weather conditions, acquired from either the base station sensor or a remote online resource like a weather data website. Alternatively, or additionally, data uploaded by a base station to a drone may include a machine-readable file encoding a three dimensional ('3D') model of a physical structure previously captured as environmental image data by the drone, then uploaded to and stored at the base station, and processed by same into the said digital model. The 3D model communicated to the drone may then be used as a variable input to onboard obstacle-avoidance routine(s).

An embodiment of the base station may further comprise at least one sensor operably connected to the data processing means, wherein the data processing means is further configured to receive, store and process data from the or each sensor. This embodiment advantageously provides a base station with a degree of situational awareness, varying in granularity according to the type and number of sensor(s) provided. Thus many variants of this embodiment can be envisaged according to the type and number of sensor(s), each of which will be selected amongst optical, acoustic, infrared, ultrasonic and microwave sensors at least. Illustrative examples include a pressure sensor to detect whether a drone is located on the landing surface, an anemometer to detect local wind conditions, a stereographic camera to capture adjacent surroundings and model them digitally.

The data processing means is further configured to process stored data into a digital model of an environment external to the autonomous base station. Such stored data may be downloaded from the UAV, irrespective of whether it is in flight, or located on the landing surface wherein the UAV sensor(s) effectively act as the base station's own. Alternatively such stored data is received from the base station's sensor(s). In either case, this embodiment advantageously provides a base station with a degree of combined situational and locational awareness, moreover wherein the digital model can then be communicated to one or more UAV as navigational map data, for instance the set of waypoints referred hereinbefore.

The data processing means is further configured to detect changes in the external environment by comparing received data with the digital model, and to update the model according to detected changes. Subject to the base station including at least one sensor, whether its own or that of a drone on the landing surface, and subject also to latencies inherent to the data processing means, this embodiment usefully configures a base station as a static real-time monitoring platform, with at least a first field of observation associated with the sensor. Additional sensors, whether of the base station or those of one or more drone(s) in data communication therewith, advantageously provide further, respective fields of observation to the base station, configuring as a real-time monitoring platform with multiple fields of observation, moreover mobile when corresponding to sensors of drones remotely in motion.

In an embodiment of the base station, the networking module may be configurable by the data processing means for bilateral data communication with at least one other autonomous base station for UAVs and/or at least one other data processing terminal remote from the or either base station. This embodiment advantageously provides many opportunities to enhance the functionality of each base station, such as implementing redundancy and/or distribution of sensor data storage and processing across two base stations or more, expanding a base station's digital model of its environment with the digital model data of another base station or more, distributing that digital model data to connected user data processing devices, handing over communication with and optionally control of a drone to another base station, and more.

Embodiments of the base station may comprise at least one storage unit for at least one battery, for use with battery-powered unmanned vehicles having a swappable battery configuration. In a variant of this embodiment, the or each storage unit may be operably interfaced with the power transfer bus, so that batteries can be charged whilst stored therein. The technical principle of a swappable battery operably interfaced with a base station power transfer bus may be extended to other components of the UAV, for instance a swappable data storage medium operably interfaced with a base station data transfer bus, in addition to, or alternatively to, hardwired memory means of the UAV.

Embodiments of the base station may be devised, wherein the power supply is a wind, solar or other renewable energy-type power source. This self-powered configuration advantageously removes a physical power supply infrastructure from the pool of considerations when deciding where to locate a base station, thus extending the benefits of the invention to highly remote areas at minimal planning and installation costs.

According to another aspect of the invention, there is also provided a network of autonomous base stations for unmanned aerial vehicles ('UAVs'), comprising at least two base stations as described herein. Such a network usefully unifies the benefits of the inventive principles disclosed herein and extends them to a geographical area corresponding to the combination of base stations.

In an embodiment of the network, the data processing means of each base station may further configure the networking module of each autonomous base station as a relay for data received from, and/or emitted to, one or more UAVs. This configuration advantageously maintains a permanent data uplink and downlink between a base station and a drone associated with it, beyond the effective data communication range of that drone's communications module and/or that base station's networking module, so that data communication therebetween, including potentially the control relationship where the communicated data includes drone control data, remains unaffected by distance.

In an embodiment of the network, the data processing means of each base station may be further configured to process received data into a digital model of an environment external to the autonomous base station. This embodiment usefully translates environmentally sensed data into a cohesive digital dataset, variously useable as a navigational reference dataset by UAVs for flight control, and as an input to machine learning algorithms for detecting patterns, changes and other variables relevant to UAV tasking and controlling.

In a variant of the above embodiment, the data processing means may therefore be further configured to detect changes in the external environment by comparing received data with the digital model, and to update the model according to detected changes. The detection may for instance be based upon a comparison of the respective location or position of entities captured by an imaging sensor of the base station and/or UAV between successive frames, or frames at a predetermined interval. Besides updating the digital environment, substantially in real-time subject to data communication and data processing latencies, change data detected in this embodiment can then be repurposed as input weight to a determinative algorithm that outputs mission or goal data for controlling drones.

In a variant of the above embodiment, the respective data processing means of each autonomous base station may be further configured to send at least a portion of its digital model data to one or more other autonomous base station(s), and to append received digital model data to its digital model. Advantageously, this embodiment gradually yields a digital model of the entire physical environment collectively perceived by all sensors associated with all base stations across the network, including sensor(s) aboard UAV(s) in respective data communication therewith, of a geographical span corresponding to the maximum return-flight range of UAVs from the edge base stations.

In a specific embodiment of this variant, the or each other autonomous base station to which the digital model data (or portion thereof) is sent may be the most geographically proximate autonomous base station, so that the digital environmental model at each base station is first augmented by that of its immediate neighbour(s): the digital model of the entire physical environment monitored by the network gets gradually built at each base station under a peer-to-peer data distribution principle. In an alternative embodiment, the one other autonomous base station may be the last autonomous base station to connect to the network, the digital model data of which gets updated to the latest version available in the network in priority, so that this last-connected base station may contribute its own updating data to other base station(s) correspondingly soonest.

In a practical embodiment of the network, a consideration for deciding where to locate a base station in the network should necessarily include a maximum distance between any two base stations, selected so that it is never more than a maximum range of travel of a UAV configured with a full power source. In such a network, the longest-distance tasking of a UAV, corresponding to a flight from a base station to another, cannot exceed the UAV travel range by design, thus ensuring that UAVs in flights across the network have at all times sufficient autonomy to reach a base station for recharging their power source.

Under practical considerations, the or each base station in the network may be temporarily or permanently secured to legacy infrastructure adjacent highways and thoroughfares, that typically provide both vertical elevation and a pre-existing power supply and examples of which include public lighting fixtures or signage, and closed-circuit television camera site (the dedicated functionality of which base stations having at least one optical sensor, built-in or mounted to a UAV stationed thereat, can effectively replace).

Under practical considerations still, at least one base station in the network may be temporarily or permanently secured to an outer surface of a vehicle, optionally wherein the power supply of the base station is supplied by a power source of the vehicle. This embodiment advantageously provides a dynamic ad hoc reconfiguration of the network in real-time as the vehicle travels over time, which both extends the geographical area corresponding to the combination of base stations whenever the vehicle travels beyond the monitoring periphery of the network constituted of static basic stations whilst still remaining within flight range of their UAVs, and provides an additional landing and power recharging opportunity whenever the vehicle travels between static basic stations within that same monitoring periphery.

According to a further aspect of the invention, there is also provided a system comprising an autonomous bae station according to the first aspect of the invention and an unmanned aerial vehicle ('UAV') for use with embodiments of the autonomous base station and of the network as described herein, as set forth in appended claim 11.

The UAV comprises a number of conventional features such as flight powering means, at least one optical sensor for sensing environment data, at least one wireless communications module, and data processing means operably connected to, and configured to control, the flight powering means, the optical sensor and the communications module, moreover a power source operably connected to the flight powering means, the optical sensor, the communications module and the data processing means. The UAV of the invention comprises further features that enable its functional, synergistic interaction with the base station of the invention, and network made of same, wherein the data processing means is further configured to store and process data sensed by the or each sensor, and to communicate the stored and/or processed data to the autonomous base station, and wherein the power source is releasably connectable to the power transfer bus of the autonomous base station.

In distinct or complementary embodiments of the UAV, and subject to the base station embodiment under consideration, the data processing means may be further configured to process the stored data into a digital model of an environment sensed by the or each sensor; optionally to detect changes in the environment by comparing sensed data with the digital model and to update the digital model according to detected changes; optionally to send at least a portion of its digital model data to one or more other UAV(s) and to append received digital model data to its digital model; optionally to monitor location and/or altitude and/or velocity of the UAV in real-time in the environment, to convert the real-time location into a corresponding virtual location in the digital model, and to control the flight powering means according to at least one selected from the sensed environment data, the converted location and the detected changes.

In embodiments of the UAV, and subject to the base station embodiment under consideration, the power source may comprise at least one rechargeable and/or removable battery.

Other aspects of the present invention are as stated in the appended claims.

### BRIEF DESCRIPTION OF DRAWINGS

Embodiments of the present invention will now be described by way of example only, with reference to accompanying drawings, wherein:
**Figure 1** shows an embodiment of an autonomous base station according to the invention, including a landing surface, a power transfer bus, a networking module, data processing means, memory means and a power supply ;
**Figure 2** shows an embodiment of an unmanned aerial vehicle ('UAV') according to the invention, including a sensor, a wireless communications module, data processing means, memory means and a power supply ;
**Figure 3** illustrates steps of a data processing method performed by the data processing means shown in Figure 1 at runtime, according to a first embodiment of the invention ;
**Figure 4** illustrates steps of a data processing method performed by the data processing means shown in Figure 1 at runtime, according to a second embodiment of the invention, including a step of generating output UAV data ;
**Figure 5** illustrates sub-steps of the step of generating output UAV data shown in Figure 4 ;
**Figure 6** is a logical diagram of the contents of the memory means shown in Figure 1 at runtime, whilst performing the steps of Figure 4 and 5 ;
**Figure 7** illustrates steps of a data processing method performed by the data processing means shown in Figure 2 at runtime, according to the invention ;
**Figure 8** is a logical diagram of the contents of the memory means shown in Figure 2 at runtime, whilst performing the steps of Figure 6 ;
**Figure 9** illustrates steps of a data processing method performed by the data processing means shown in Figure 1 at runtime, according to a third embodiment of the invention ;
**Figure 10** shows another embodiment of an autonomous base station according to the invention, including a UAV tasking module ;
**Figure 11** illustrates steps of a data processing method performed by the UAV tasking module shown in Figure 7 at runtime ;
**Figure 12** illustrates a first network of autonomous base stations as shown in any of Figures 1 to 11 according to the invention, comprising static autonomous base stations ;
**Figure 13** illustrates a second network of autonomous base stations as shown in any of Figures 1 to 11 according to the invention, comprising a mobile autonomous base station ;
**Figure 14** illustrates steps of a data processing method performed by the data processing means of each base station in the network of Figure 12 or 13 at runtime, to implement an autonomous monitoring system according to the invention ;
**Figure 15** illustrates steps of an alternative data processing method performed by the data processing means of each base station shown in Figures 12 or 13 at runtime, in a network of base stations as shown in Figures 10 and 11.

### DETAILED DESCRIPTION OF DRAWINGS

*Inter alia* the present invention is concerned with providing an information gathering and monitoring solution with enhanced autonomy of operation and control, based on a network of autonomous base stations that are situated across a physical environment, that are in data communication with drones and that are processing data detected by the drones in that environment. Embodiments of the base station of the invention, of networks constituted of same and of data processing methodologies implemented therein for controlling drone behaviour are described hereafter by way of non-limitative examples.

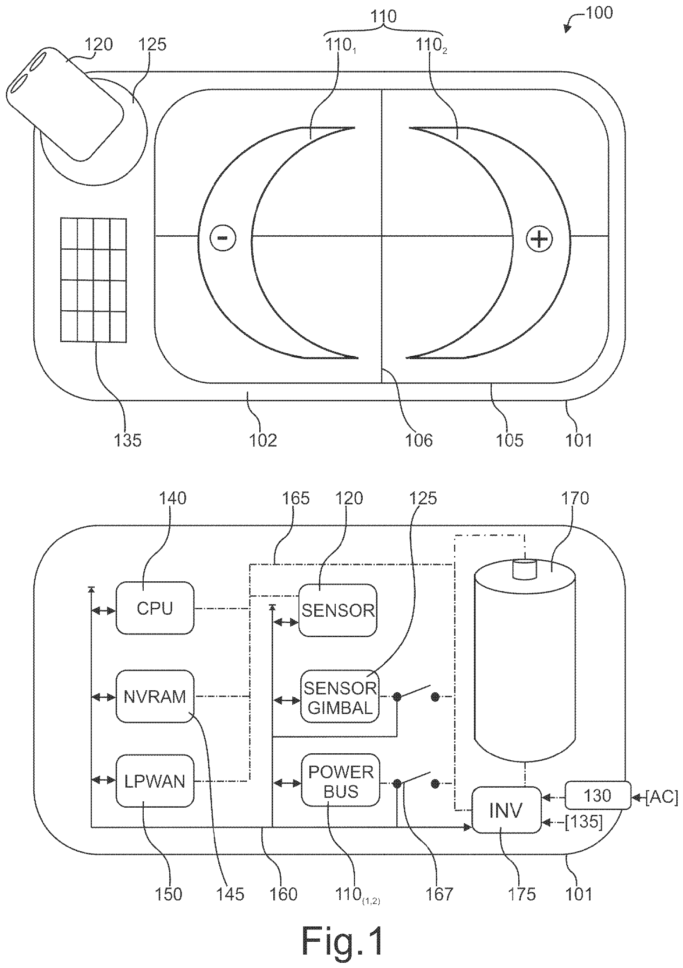

With reference to Figure 1, a first embodiment of an autonomous base station 100 according to the invention is shown, which comprises a substantially rectangular casing 101 with a substantially planar top surface 102. A first portion of the top surface 102 is configured as a planar landing surface or landing pad 105 for stationing an unmanned aerial vehicle UAV thereon, and is covered with a high-contrast checkerboard pattern 106. In the solution of the invention, each base station 100 is intended to serve as a ground control point ('GCP'), by way of common point of reference for the environmental data sensed by overhead optical sensors: the usefulness of a GCP is maximised by a high-contrast design, to ease distinguishing the GCP from its surrounding environment, and by a clear geometry on the landing surface 105 denoting the measured centre of the GCP.

The landing surface 106 comprises a power transfer bus 110 for supplying power to a power source of a UAV resting thereon. In the example, the power transfer bus 110 is implemented as complementary anode 110₁ and cathode 110₂, each of which is shaped as a crescent of substantially uniform width, having a geometric centre substantially concentric with the checkerboard pattern 106 and so in diametrical opposition on relative to the other, and having a top surface co-planar with the landing surface 106. Each of the anode 110₁ and the cathode 110₂ is either made of, or coated with, an electrically-conducive material substantially impervious to the elements. Alternatively the power transfer bus 110 may be implemented following contactless techniques, for example coil- and frequency-based inductive charging techniques well-known to the skilled person, in order to enhance imperviousness to the elements.

The base station 100 of this embodiment further comprises a sensor, in the example an optical sensor 120 such as an Intel^{®} RealSense^{®} stereoscopic camera, which is mated to a dual-axis gimbal mechanism or module 125 enabling selective horizontal and vertical rotation of the sensor and its combined aperture, wherein the gimbal module 125 is itself secured to a second portion of the top surface 102. The gimbal module 125 may instead be secured to the casing 101 in a configuration that avoids encroaching upon the airspace immediately above the top surface 102, for instance to a lateral surface of the casing 102, or to the bottom surface opposed to the top surface 102 and so projecting vertically underneath the casing 101 when the autonomous base station 100 may be secured to an elevated support.

Embodiments of the base station 100 may also comprise another type of sensor, e.g. and non-exhaustively acoustic, infrared, ultrasonic, microwave and combined forms thereof such as LIDAR, by way of additional or alternative sensor(s), depending upon the characteristics to monitor in the environment observable from the base station 100.

In the solution of the invention, each base station 100 should preferably be retrofitted to, or adjacent, a pre-existing infrastructural element with an associated mains power supply, examples of which include public lighting lamp posts, mobile telephony masts and the like, for both ease and cost-effectiveness of deployment, wherein each base station 100 includes a conventional and weatherproofed mains power input interface 130.

The base station 100 of this embodiment further comprises a renewable power source for energetic autonomy, in the example a photovoltaic panel 135 secured to a third portion of the top surface 102. Further photovoltaic panels may be implemented about the casing 101, or the photovoltaic panel 135 may be dimensioned to occupy substantially the entire top surface 102 thereof, save as to portions occupied by the power bus 110 and the gimbal module 125, for maximising solar energy capture. Embodiments may comprise a wind micro-turbine (not shown) by way of additional or alternative local renewable energy source, which is secured to, or otherwise associated with, the casing 101 in a configuration that avoids encroaching upon the airspace proximate the landing surface 105, for instance substantially offset laterally relative to the landing surface 105, or offset vertically underneath the casing 101 when the autonomous base station 100 may be secured to an elevated support.

Further components of the base station 100 are housed within the casing 101, to shield them from environmental wear and tear. Such further components include a microprocessor 140, for example a single-board microcontroller conforming to the Arduino^{™} open-source architecture, a non-volatile memory module 145 which may form part of the microcontroller board 140, and a low power wide area network (LPWAN) wireless networking module 150, for example a micromodule of the 'CMWX1ZZABZ' range manufactured and distributed by Murata Manufacturing Co, Ltd of Kyoto, Japan and conforming to the LoRaWAN^{™} open networking standard. Higher-bandwidth alternatives conforming to different networking standards are considered to fall within the scope of the present disclosure. The power transfer bus 110, the sensor 120, the gimbal module 125, the microprocessor 140, the memory 145 and the LPWAN module 150 are each interfaced with an input-output data bus 160 and a power supply bus 165. In particular, the power transfer bus 110 and the gimbal module 125 each have a respective power input connected to the power supply bus 165, and a respective switch 167 connected to the I/O bus 160 for receiving control supply commands from the microprocessor 140.

An internal rechargeable battery 170 is connected to the power supply bus 165, having a power storage capacity sufficient to power all base station components 110-167 described hereinabove, over the minimum period desirable for autonomous operation of the base station 100. The power supply bus 160 is further connected to an inverter module 175 interfacing same with the photovoltaic panel 135, the inverter module being further connected to the I/O bus 160 for receiving control commands from the microprocessor 140 to switch input supply to the power supply bus 160 between the mains supply connected through the interface 130, the solar power source 135, and the battery 170 which is recharged from either the mains supply 130 or the solar source 135.

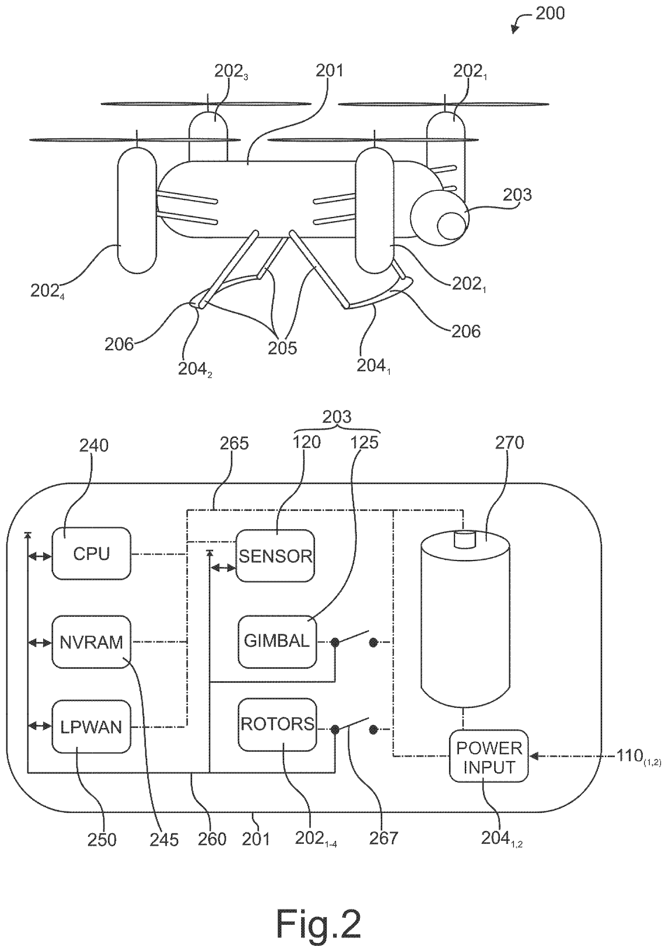

With reference to Figure 2 now, a first embodiment of a drone 200 for use with the autonomous base station 100 is shown, in the example an unmanned aerial vehicle 200 with a conventional quadrotor rotorcraft configuration. The UAV 200 comprises a frame centred about an elongate body 201, to which four rotor modules 202₁₋₄, are secured substantially equidistantly of each other and symmetrically relative to the main axis of the UAV body 201, with a pair of rotor modules located on either side of the UAV body 201.

The UAV 200 further comprises a gimballed optical sensor arrangement 203 mounted substantially forward of the body 201, for instance identical to the sensor arrangement (120, 125) of the base station 100, and a pair of landing skids 204_{1,2} secured to and projecting underneath the body 201, and configured as a power transfer interface. Again, embodiments of the UAV 200 may also comprise another type of sensor, e.g. and non-exhaustively acoustic, infrared, ultrasonic, microwave and combined forms thereof such as LIDAR, by way of additional or alternative sensor(s), depending upon the characteristics to monitor in the environment both adjacent to and remote from the base station 100.

Further components of the UAV 200 are housed within the body 201, to shield them from environmental wear and tear. Such further components include a microprocessor 240, for example the same single-board microcontroller conforming to the Arduino^{™} open-source architecture as the base station 100, a non-volatile memory module 245 which may again form part of the microcontroller board 240. Alternatively, or additionally, the non-volatile memory module 245 may be a removeable data storage medium operably connected to a medium reader device, for instance a micro Secure Digital^{™} ('microSD^{™}') data storage card. the UAV 200 further comprises a low power wireless communications module 250, for example the same micromodule conforming to the LoRaWAN^{™} open networking standard as the base station 100. Conventionally, further components of the UAV 200 may including one or more of accelerometers, gyroscopes, LED lights and a Global Positioning System ('GPS') module.

The four rotor modules 202₁₋₄, the sensor 120, the gimbal module 125, the microprocessor 240, the memory 245, the LPWAN module 250 and any other electrically-powered components as listed above, are each interfaced with an input-output data bus 260 for receiving control commands from the microprocessor 240, and with a power supply bus 265. In particular, at least the four rotor modules 202₁₋₄, and the gimbal module 125 each have a respective power input connected to the power supply bus 265 through a respective switch 267 connected to the I/O bus 260 for receiving control supply commands from the microprocessor 240.

An internal rechargeable battery 270 is connected to the power supply bus 265, having a power storage capacity sufficient to power all UAV components 240-267 described hereinabove, over the minimum period desirable for autonomous operation of the UAV 200.

The power supply bus 265 is further connected to the power transfer interface 204_{1,2}. In this embodiment, each landing skid 204_{1,2} comprises first and second strut members 205 joined by a crescent-shaped skid member 206. Each strut member 205 projects downward, symmetrically with respect to the main axis of the UAV body 201, and the respective distal end thereof is secured to a respective end of the skid member 206. The skid members 206 or at least their soles are either made of, or coated with, an electrically conducive material impervious to the elements, and electrically connected with suitable wiring within the leg members 205, wherein one landing skid 204₁ is configured respectively as an anode 204, and the other landing skid 204₂ as a complementary cathode 204₂. This configuration of the landing skids 204_{1,2} complements the configuration of the base station power transfer bus 110, to electrically interface the base station electrical supply circuit 165 with the UAV electrical supply circuit 165 whenever the UAV 200 rests upon the landing surface 105.

According to instructions embodying a data processing method described hereinbelow, that are performed by the microprocessor 240 in use, the UAV 200 is operationally configured to at least store and process environmental data sensed by the or each sensor arrangement 203, and to communicate this stored and/or processed data to at least one autonomous base station 100, in addition to conventional flight control and obstacle avoidance instructions.

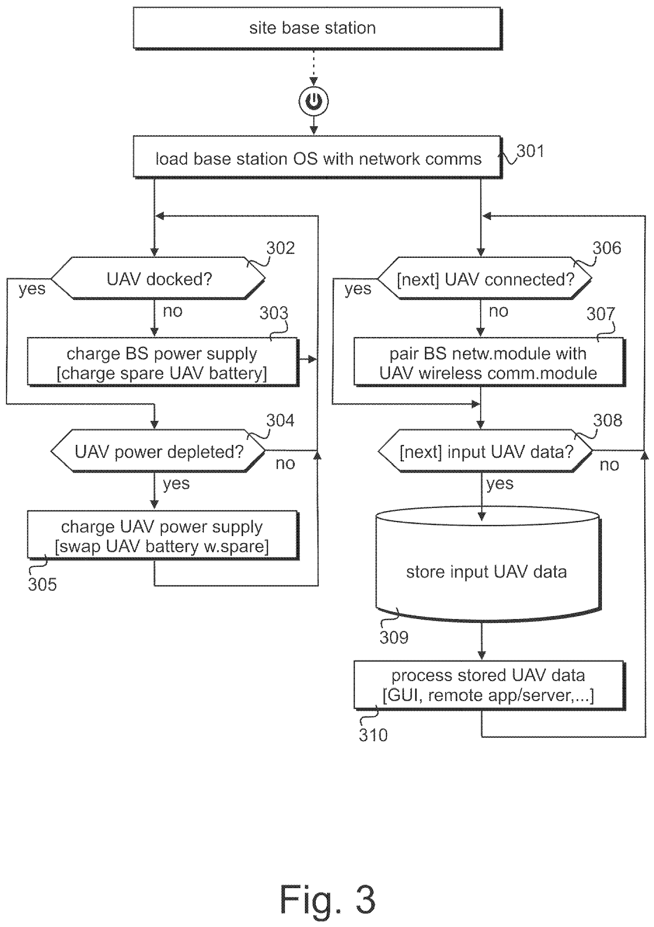

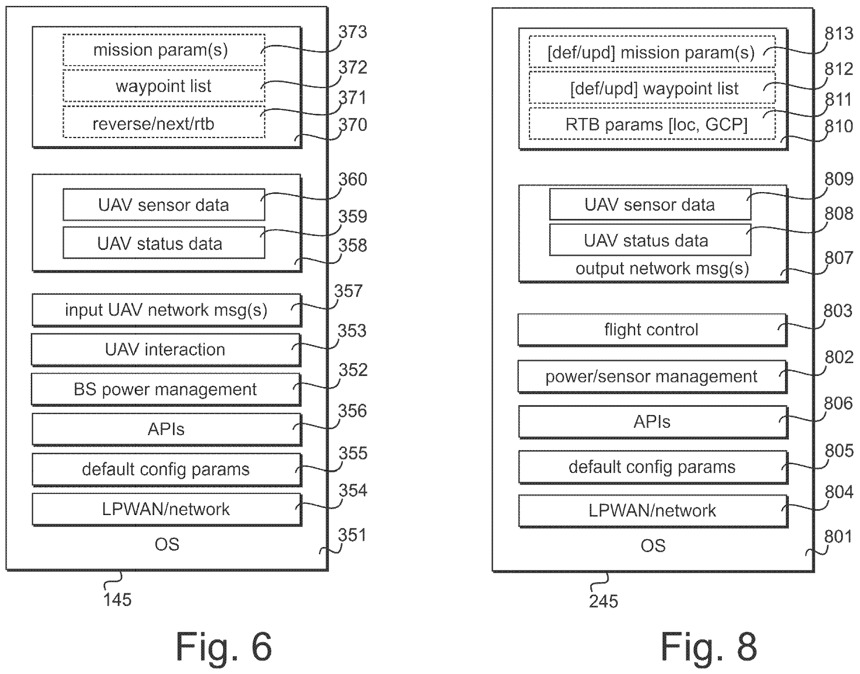

With reference to Figures 3 and 6 now, in use the base station 100 is initially transported to a permanent operating location and sited thereat, for instance through secure retrofitting to a legacy infrastructure and preferably with a pre-existing power supply circuit, such as a street light fixture. The base station mains power input interface 130 is connected to the pre-existing mains power supply if it is available, wherein the base station data processing means 140 is then started. Alternatively the base station data processing means 140 is started from any residual power stored in the battery 170.

At step 301, an operating system ('OS') 351 including sets of function-specific data processing instructions 352, 353 is loaded into the memory 145 to configure the microcontroller 140 for controlling the operating of base station components according to the invention, including a set of network subroutines 354 for controlling and communicating data through the LPWAN module 150. The startup step 301 also loads default configuration data 355, which includes standard operational parameters for the power transfer bus 110, the sensor 120, the gimbal 125, the LPWAN module 150, and each switch 147. The startup step 301 further loads one or more Application Programmer Interface(s) ('API') 356 for controlling and receiving data from the power transfer bus 110, the sensor 120, the gimbal mechanism 125, and for controlling the actuation of switch(es) 147 through the I/O data bus 160.

The initial loading of step 301 may further cause the microcontroller 140 to perform a status check of all hardware components of the base station, including the power level of the battery 170, and a calibration of the sensor 120 and gimbal 125 to initialise the gimbal axes and coordinate same at origin with the sensor aperture. Upon completing the OS loading of step 301, in this embodiment the microprocessor 140 processes two data processing threads substantially in parallel, one dedicated to power management and the other to UAV interaction.

In the first power management thread 352, a first question is asked at step 302, about whether a UAV 200 is currently resting upon the landing surface 105. This determination may for instance be performed by detecting an electrical impulse, signal or potential generated by the electrical conduction between UAV landing skids 204_{1,2} resting respectively upon the anode and cathode portions 110_{1,2} of the base station power transfer bus 110. When the question of step 302 is answered negatively, the microprocessor 140 controls the inverter 175 to charge the internal battery 170 at step 303, either from the connected mains supply or the photovoltaic panel 135, and the logic loops back to the question of step 302.

Whenever the question of step 302 is answered positively, a UAV 200 is resting upon the landing surface in electrical contact with the power transfer bus 110 and a next question is then asked at step 304, about whether the internal battery 270 of the UAV is depleted. When the question of step 304 is answered positively, the microprocessor 140 controls the switch 167 associated with the power transfer bus 110 to close the circuit with the power supply circuit 165, and so charge the UAV battery 270 at step 305 through the power transfer bus, in prioritised order from the connected mains supply, or the internal battery 170 or the photovoltaic panel 135. The logic in this thread loops back to the question of step 302, which continues to be answered positively, and the question of step 304 is eventually answered negatively when the UAV battery 270 is fully charged.

The logic of this power management thread 352 advantageously ensures that the power level of the base station battery 170 is maintained as high as possible, as a redundant power supply should a connected mains power supply fail; and that charging the battery 270 of a docked UAV is prioritised over charging the base station battery 170, thus restoring the operartional capacity of a UAV as early as possible.

In the second UAV interaction thread 353, a first question is asked at step 306, about whether the LPWAN module 150 is connected with the wireless communication module 250 of a first, or further, UAV 200, regardless of whether it is docked on the landing surface 105 or in flight remotely from the base station 100. This determination may for instance be performed by detecting a network pairing or handshake message broadcast by a UAV wireless communication module 250 in data communication range of the base station LPWAN module 150, with which no network session has yet been established.

When the question of step 306 is answered negatively, at step 307 the microprocessor 140 controls the LPWAN module 150 to establish a networked data connection with the first, or further, wireless communication module 250 detected, for receiving UAV data therefrom according to the invention. The logic then proceeds to a next question at step 308, likewise when the first question of step 306 is answered positively instead, e.g. when a respective networked data connection exists for the or each detected UAV wireless communication module 250 in data communication range of the base station 100.

Question 308 determines whether the LPWAN module 150 has received a next communication encoding UAV data over a network connection, or not. This determination may be performed by querying a network input buffer 357 organised under a first-in first-out principle, in which incoming network messages from UAVs are stored as soon as received by the LPWAN module 150. It will be readily understood by the skilled person that this approach is merely illustrative, and may be either dispensed with, or still remain within the timespan of a substantially real-time performance, subject to the data processing capacities of, and the network latency between, the base station 100 and the UAV 200.

When the question of step 308 is answered negatively, the logic loops back the question of step 306. Alternatively, when the question of step 308 is answered positively, the microprocessor 140 decodes the network message and stores the decoded UAV data 358 in the memory 145 at step 309. The UAV data 358 comprises both UAV status data 359, including at least power level in the UAV battery 270 and data representative of the UAV position in the environment, and UAV sensor data 360, including in this example digital image data 360 captured by the UAV optical sensor 120, for instance a sequence of image frames.

At a next step 310, the microprocessor 140 processes the stored data 358 according to environmental monitoring principles and purposes, for instance it forwards some or all of the stored UAV data to a remote data processing terminal or server in data communication with the base station 100 through the LPWAN module 150. The logic in this thread then loops back to the question of step 306.

The logic of the UAV interaction thread 353 advantageously ensures that the base station 100 remains connected with each UAV 200 within the communication range of its networking module 150; and that it receives and stores environmental data captured by the sensor 203 of each such UAV 200 substantially in real-time. In tandem with the logic of the power management thread, and the logic controlling each UAV 200 as described hereafter, the solution in this embodiment provides a basic autonomous environment monitoring platform requiring no other or further human input or interaction in use, than at the initial, physical installation of a base station.

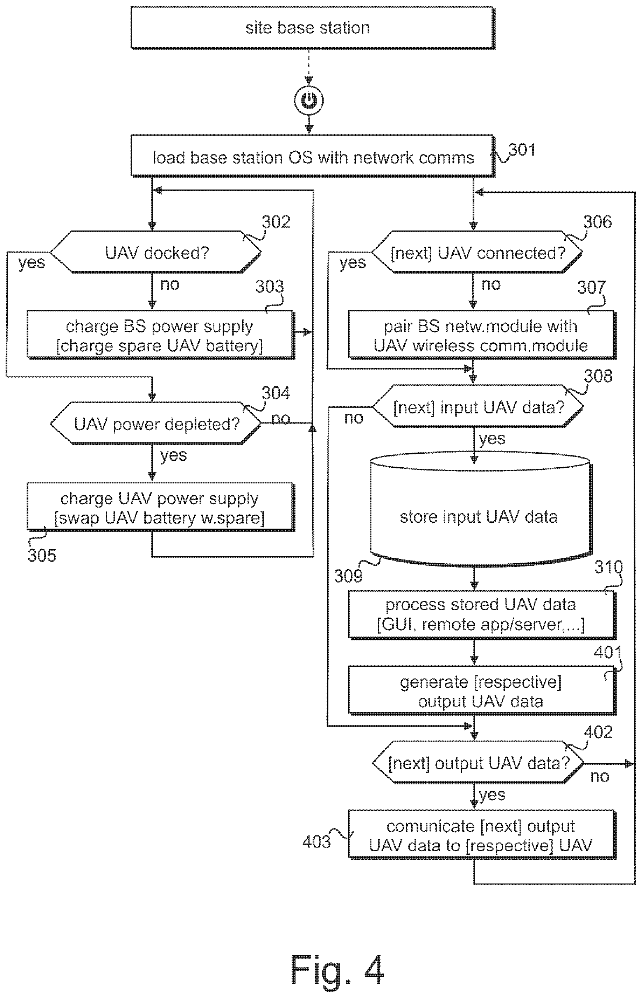

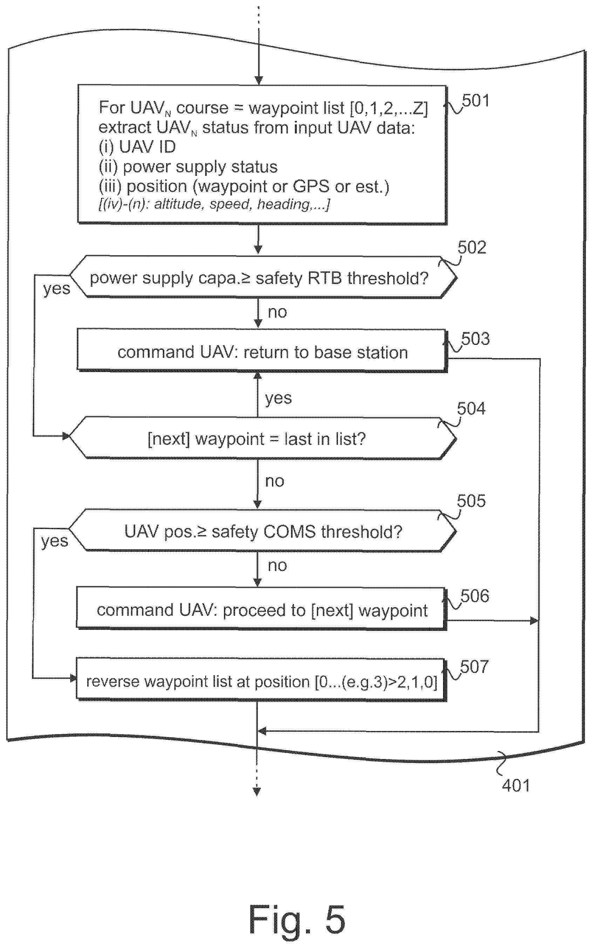

In order to enhance the operational autonomy of the solution, with reference to Figures 4 to 6 now, the networking module 150 of the base station 100 can be further configured by the OS 351 for bilateral data communication with the UAV wireless communication module 250, wherein the UAV interaction thread 353 includes further data processing steps.

After the data processing step 310 that follows the UAV storage step 309, or as a sub-step thereof, the microprocessor 1400 generates an output network message 370 for a respective UAV to which it is connected at step 401. According to operating principles of each UAV 200 described hereafter, each UAV stores a travel course as a list of sequential waypoints, with each waypoint representative of a discrete position in the environment, wherein the first waypoint representative of a base station 100 -for instance the base station which first pairs with a UAV 200 at step 307- and wherein the list is bounded by a last waypoint. Within step 401, the microprocessor 140 determines at least the UAV battery power level and the UAV position from the UAV status data 359 at sub-step 501.

A first question is then asked at sub-step 502, about whether the UAV battery power level still exceeds a power capacity safety threshold, that is representative of a minimum power level required by the UAV to return to the base station 100 for charging its internal battery 270, relative to its current position. This determination may be calculated from estimating the distance between the base station 100 and the UAV 200 based on the communicated UAV position, estimating flight time for the UAV to travel this estimated distance, default power depletion rates for the UAV included in the default configuration data 355.

When the question of sub-step 502 is answered negatively, indicating a UAV battery power level at or below the calculated safety threshold, the microprocessor 140 generates an output network message 370 for the UAV at sub-step 503, encoding a command 371 to return to the first waypoint in the list, which corresponds to the base station 100. The logic then bypasses all remaining sub-steps of step 401. Alternatively, when the question of sub-step 502 is answered positively, a next question is asked at sub-step 504, about whether the next waypoint in the UAV list is the last. When the question of sub-step 502 is answered positively, the microprocessor 140 generates the same output network message 370 for the UAV at sub-step 503, encoding the same command 371 to return to the first waypoint in the list, which corresponds to the base station 100.

Alternatively, when the question of sub-step 504 is answered negatively, a next question is asked at sub-step 505, about whether the location of the UAV exceeds a communication safety interval, that is representive of the of maximum data communication range of the base station networking module 150 in the environment. This may be determined by calculating the distance between the base station and the UAV, and/or estimating degradation in the communication strength therebetween, based on characteristics of the wireless network signal emitted by the UAV using fast and computationally-inexpensive techniques to derive a signal-to-noise ratio ('SNR'), received signal strength indicator ('RSSI') values or the like, preferably under conservatively-adjusted margins to account for path loss in non-line-of-sight situations associated with operating in dense urban enviromnents.

When the question of sub-step 505 is answered negatively, indicating the UAV wireless networking module 250 is still within the communication range of the base station LPWAN module 150, the microprocessor 140 generates an output network message 370 for the UAV at sub-step 506, encoding a command 371 to proceed to the next waypoint in the list.

Alternatively, when the question of sub-step 505 is answered positively, indicating the UAV wireless networking module 250 is about to exit the communication range of the base station LPWAN module 150, the microprocessor 140 generates an output network message 370 for the UAV at sub-step 507, encoding a command 371 to reverse the waypoint list as of the current location, whereby the UAV 200 is effectively commanded to reverse travel along its earlier flight path from this point in time forward, back within the communication range of the base station LPWAN module 150.

Subsequently to sub-steps 503, 506 or 507, network messages 370 encoding UAV commands 371 are either communicated immediately to the UAV for purposes of operational expediency, or output to a network output buffer organised under a first-in first-out principle, in which outgoing network messages to UAVs are stored as soon as output by the UAV interaction thread 353, for purposes of parallel data processing optimisation. Accordingly, subsequently to sub-steps 503, 506 or 507, or when the question of step 308 about new input UAV data is answered negatively, a question is then asked at step 402, about whether there is any outgoing network message to a UAV waiting to be sent. When the question of step 402 is answered positively, the microprocessor 140 controls the LPWAN module 150 to communicate the network message to the target UAV at step 403. Control subsequently loops back to the question of step 306 in this UAV interaction thread 353, likewise when the question of step 402 is answered negatively.

The logic of this UAV interaction thread 353 advantageously ensures that the base station 100 controls the operation of each UAV 200 connected therewith; that a UAV can safely be maintainted within a communication range of the base station networking module 150 at all times; and that a UAV returns to the base station for charging its internal battery 270 whenever the power level thereof requires it. In tandem with the logic of the power management thread, and the logic controlling each UAV 200 as described hereafter, the solution in this embodiment provides an enhanced autonomous environment monitoring platform, in which UAVs are capable of autonomous operation, without any other or further human input or interaction in use, than at the initial, physical installation of a base station.

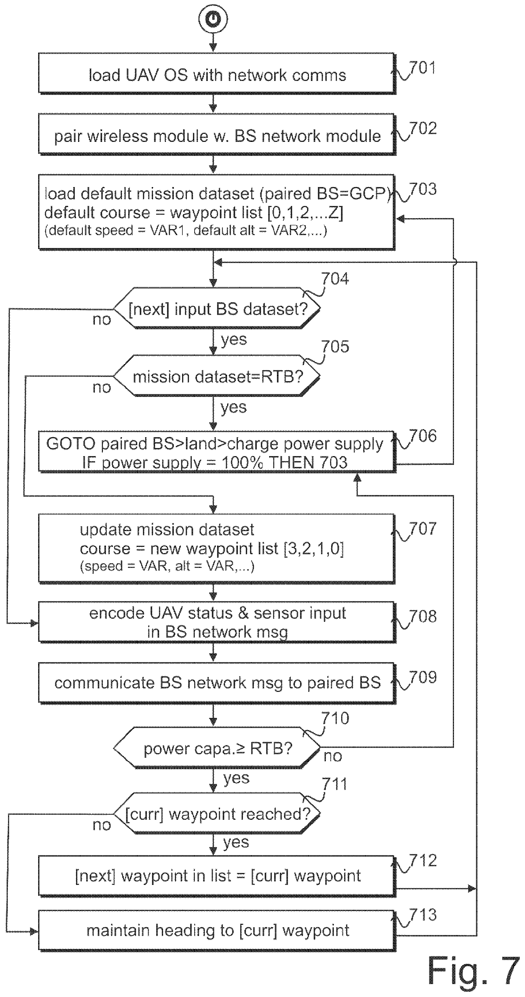

With reference to Figures 7 and 8 now, in use the UAV 200 is initially transported to a location proximate a first base station 100, having at least a nominal charge in its internal battery 270 sufficient to elevate and land the UAV onto the base station landing surface 105, wherein the power supply bus 265 is then switched on to start the UAV data processing means 240.

At a first step 701, an operating system ('OS') 801 is loaded into the memory 245 to configure the UAV microcontroller 240 for controlling the operating of the drone according to the invention, including sets of function-specific data processing instructions, namely a flight controller thread 802, a power and sensor management thread 803, and a set of network subroutines 804 for controlling and communicating data through the UAV LPWAN module 250. The startup step 701 also loads default configuration parameters 805, which includes standard operational parameters for the rotors 202₁₋₄, the sensor arrangement 203, the LPWAN module 250, each switch 267, and any further onboard components, typically including one or more amongst accelerometers, gyroscopes and a Global Positioning System ('GPS') module. The startup step 701 further loads one or more Application Programmer Interface(s) ('API') 806 for controlling and receiving data from the battery 270, the sensor arrangement 203 and for controlling the actuation of switch(es) 267 through the I/O data bus 160, amongst others.

The initial loading of step 701 may further cause the microcontroller 240 to perform a status check of all hardware components of the UAV, including the power level of the battery 270, and a calibration of the sensor arrangement 203 and other calibratable components (GPS, accelerometer, gyroscope), to initialise flight, navigational and sensing actuators and sensors.

Upon completing the OS loading of step 701, then immediately at step 702 the microcontroller 240 first causes the LPWAN module 250 to broadcast a pairing signal, which the nearest base station 100 nearby receives and subsequently processes according to steps 306, 307 as previously described. This step declares this first-paired base station 100 as the UAV's base station of reference, and the base station's landing surface 105 as the UAV's optical sensor GCP, for ulterior operations.

At a next step 703, the microcontroller 240 then loads a first mission dataset 810 embodying default operational parameters 810 for the UAV 200, for parameterising the flight controller 803. This mission dataset 810 effectively encodes a default functional behaviour, or 'default mission', for the UAV 200 and comprises three distinct subsets of data.

A first subset 811 comprises reference base station data, which is used by the flight controller 803 to guide the UAV 200 to a base station 200, wherein the reference base station data is written to the first subset when a base station 100 first registers the UAV 200 at step 902, and includes at least the base station location, a rule declaring the base station location as the first waypoint in any waypoint list, and a rule declaring the base station landing surface 105 as the landing target.

A second subset 812 comprises a list of sequential locations or 'waypoints' defining a default travel course, for instance a square or a circle, with each waypoint representative of a discrete position that is offset relative to the first waypoint, itself written to the second subset 812 according to the relevant rule in the first set 811, thus again when a base station 100 first registers the UAV 200 at step 902. In relevant embodiments of the base station 100, this second subset 812 is updateable by base station network messages 370.

A third subset 813 comprises further non-locational mission parameters, variously including flight characteristics such as minimum and/or maximum altitude values and minimum and/or maximum speed value(s) between waypoints or across the travel course, and mission-topical non-flight parameters, as will be described with further embodiments of the base station 100 hereinafter. In the example, the default third subset 813 comprises at least minimal and maximal altitude values, as bounded by any statutory requirements applicable in the jurisdiction of the base station 100. In relevant embodiments of the base station 100, this third subset 813 is updateable by base station network messages 370.

Upon loading the default mission dataset 810, a first question is then asked at step 704, about whether the UAV 200 has received a new mission dataset 370 from the base station 100 over the network connection. When the UAV interaction thread 353 at a base station 100 is not configured to perform steps 401 to 403, every iteration of the question is answered negatively for that base station. Whenever the question of step 704 is answered positively, a next question is immediately asked at step 705, about whether the new command directs the flight controller 802 to the first-listed waypoint, corresponding to the base station location as per step 703, and embodying a return-to-base instruction.

Whenever the question of step 705 is answered positively, then at step 706 the flight controller 802 pilots the UAV to the base station, lands the UAV upon the landing surface 105 with the landing skids 204_{1,2} in electrical contact with the power transfer bus anode 110₁ and cathode 110₂, whereby the battery 270 gets charged up according to steps 302, 304, 305 as previously described. Step 706 finally commands the logic to return to step 703 when the power level of the internal battery 270 indicates a full capacity. Alternatively, the question of step 705 is answered positively and, at step 707, the microprocessor 240 updates the current mission dataset 810 in the memory 245 with the dataset 370 received from the base station 100, inclusive of a substitutive waypoint list 372 at least, and optionally further variables 373 e.g. indicative of flight altitude and speed.

Subsequently to step 707, or whenever the question of step 304 is answered negatively, the microprocessor 140 generates an output base station network message 807 at step 708, in which it encodes current status data 808, comprising at least its battery power level and its location (for instance queried from an onboard GPS module) the sensor, and the output data 809 of its sensor arrangement 203. The microprocessor 140 then causes the onboard LPWAN module 150 to communicate the encoded network message 807 to the base station newtork module 150 at step 709.

A question is then asked at step 710, about whether the UAV battery power level still exceeds a power capacity safety threshold, that is representative of a minimum power level required by the UAV to return to the base station 100 for charging its internal battery 270, relative to its current position. This determination may be calculated as previously described, however with reference to the locally-detected position of step 708 and power depletion rates for the UAV included in the locally-stored default configuration data 805.

When the question of step 710 is answered positively, indicating a UAV battery power level at or below the calculated safety threshold, the logic proceeds to step 706 as previously described. This subroutine is included in the UAV logic both for compatibility with base stations 200 that do not implement the bilateral communication functionality of steps 401 to 403, and as a failsafe in case of communication failure with a base station 100 implementing steps 401 to 403.

Alternatively, when the question of step 710 is answered negatively, then the logic controlling the UAV 200 proceeds to a navigational subroutine in which a question is asked at step 711, about whether the UAV 200 has reached a position in the environment corresponding substantially to the currently-targeted waypoint in the list thereof. When the question of step 711 is answered positively, the microprocessor 140 declares the next waypoint in the list to be the currently-targeted waypoint, and the logic loops back to the question of step 704. Alternatively, when the question of step 710 is answered negatively, then the microprocessor 140 commands the flight controller 802 to maintain the UAV heading towards the currently-targeted waypoint, and the logic again loops back to the question of step 704.

This UAV logic advantageously ensures that the UAV 200 operates both autonomously and continuously, sensing environmental data 809 and relaying it substantially in real-time, subject to data processing and network communication latencies, to a base station 200 which it uses as a power charging location when required.

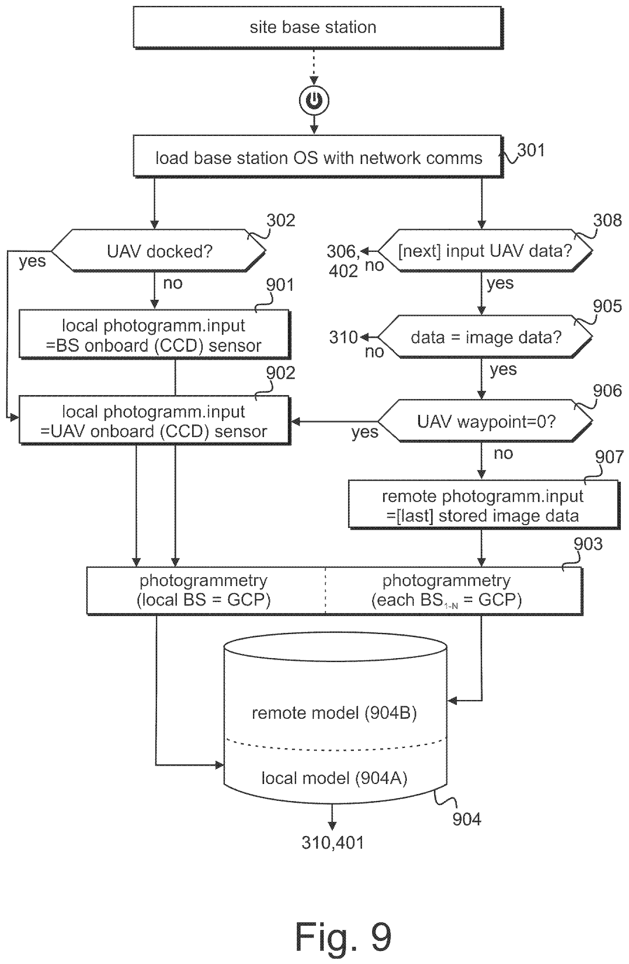

In order to enhance both power efficiencies and the functionality of the solution, with reference to Figure 9 now, the base station power management thread 352 and the UAV interaction management thread 353 can be further configured by the OS 351 for optimal selection between sensors available at the base station, and for generating a digital model of the environment from the stored sensed data, for instance through photogrammetry techniques.

In this embodiment, when the question of step 302 is answered negatively, indicating that no UAV 200 is currently stationed on the landing surface 105, then besides charging the internal battery 170 at step 303, the microprocessor 140 also selects the base station optical sensor 120 as a data input source for a photogrammetry data processing thread at step 901. Alternatively, when the question of step 302 is answered positively, indicating that a UAV 200 with its own sensor arrangement 203 is currently stationed on the landing surface 105, then the microprocessor 140 selects the UAV optical sensor 120 as the data input source for the photogrammetry thread at step 902. Advantageously, this logic allows a base station 100 without an optical sensor, or with a faulty optical sensor 120, to maintain an environment sensing capacity on an ad hoc basis, whilever a UAV 200 rests upon the landing surface 105.

In this embodiment still, when the question of step 308 is answered positively, indicating that a UAV network message 357 has been received, then besides storing the UAV data 358 decoded therefrom at step 309, a further question is asked at step 905, about whether UAV sensor data 360 therein includes digital image data. When the question of step 905 is answered negatively, the logic proceeds to step 310 as previously described.

Alternatively, when the question of step 905 is answered positively, a further question is asked at step 906, about whether location data within the UAV status data 359 corresponds substantially to the location of the base station 100, for example when the UAV 200 is approaching, hovering near, or lifting off from, the landing surface 105, i.e. within the environment locally observable from the base station 100.

When the question of step 906 is answered positively, the logic proceeds to step 902 as previously described. Alternatively, when the question of step 906 is answered negatively, indicating that the UAV 200 is currently remote from the environment local to the base station 100, on the landing surface 105, then the microprocessor 140 selects the digital image data 360 last stored at step 309, corresponding to the image data determined at question 905, as the data input source for the photogrammetry thread at step 907.

The photogrammetry data processing thread is continuously processed at step 903, in parallel with the power management thread 352 and the UAV interaction thread 353, and processes image data input to it according to the selections of steps 901, 902 and 907, into a digital model 904 of selective or homogenised granularity.

The model 904 combines a local model 904A of the environment locally observable from the base station 100 according to the image data source selected at steps 901, 902, and a remote model 904B of the environment remotely observable by a UAV 200 in flight according to the image data source selected at step 907, in both instances using the base station landing surface 105 by way of GCP.

In order to enhance the autonomy of the solution still further, but also its operational versatility, an embodiment of the base station 100 adapted to model the monitored enviroment as previously described, may include further capacities, namely to detect changes in that environment, by comparing sensed data with the digital model, to update the digital model according to detected changes and, in a particularly useful variant, also update the operational parameters 810 at the UAV 200 according to such detected changes.

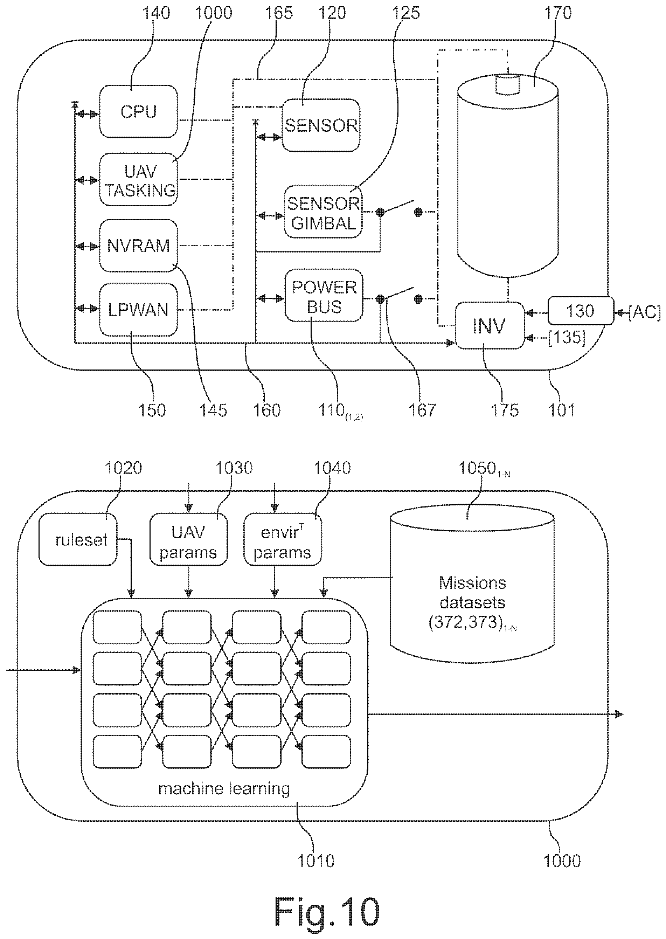

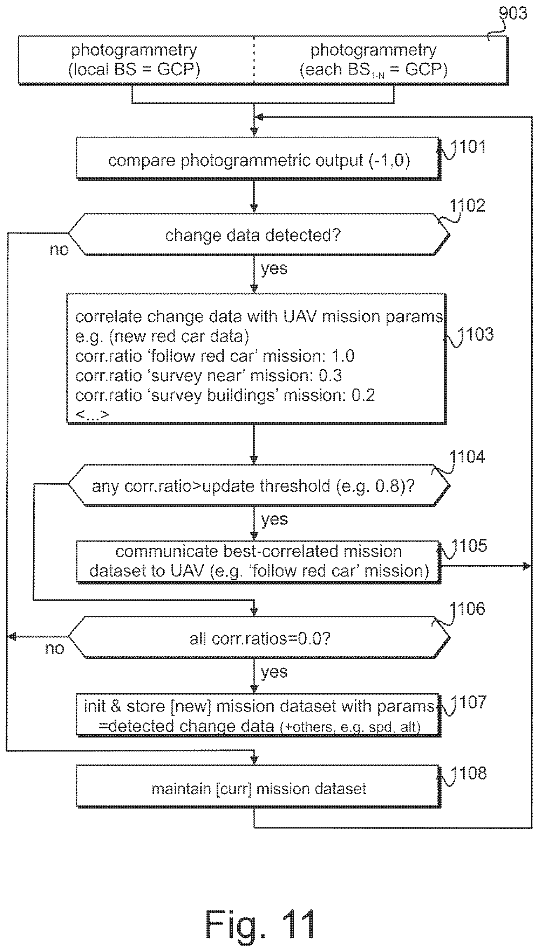

One such embodiment is described by reference to Figures 10 and 11, wherein the base station 100 further comprises a UAV tasking module 1000, that is connected both to the data I/O bus 160, for exchanging data and commands with the microprocessor 140, the LPWAN module 150 and other data processing and/or storing components of the base station 1000, and to the power supply bus 165 for powering purposes.

The UAV tasking module 1000 of the example implements a machine-learning data processing technique, represented figuratively in Figure 10 by a machine-learning ('ML') logic module 1010 structured as a decision tree of weighed nodes. The main input to the ML logic module 1010 is the sensed image data 360.

Further aspects of the ML logic module 1010 include a ruleset 1020 encoding data-splitting semantic rules based on classification features of image components, which are applied to the input image data for segregating semantic information in each image frame ; UAV-specific parameters 1030 which may comprise the stored UAV default parameters 355 and the continuously-received UAV status data 359 ; environment-specific parameters 1040 which may comprise the image component features referenced by the ruleset 1020 ; and a plurality of stored mission datasets 1050_{1-N}, each representative of a distinct UAV mission, an example of which was previously described as the default mission dataset 810 loaded by the UAV logic at step 703.

Accordingly each mission dataset 1050_{1-N} again comprises at least two distinct subsets of data. A first subset 372 comprises a list of sequential locations or 'waypoints', in this case defining a specific travel course associated with the mission purpose or characteristics, for instance a straight line between the first waypoint and a second and last waypoint. A second subset 373 comprises further non-locational mission parameters, in this case specifically defined according to the mission purpose or characteristics, for instance to sustain a maximum flight speed along a main portion of the travel course and a minimum flight speed, close to loitering speed, for the remaining portion of the travel course, at a specific height.

Such an example mission dataset 1050_{N} defines a mission to go monitor the environment proximate the last waypoint as soon as possible, but then to monitor there for as long as possible before the UAV battery 270 requires charging. Further or different environment-specific parameters 1040 may be included within the second subset 373 as a function of the mission purpose, for instance one or more image component feature(s), an example of which may be an image of a vehicle of a specific colour at a specific or approximate height, defining a mission to detect one or more such vehicles of the specific colour in the environment.

In use, the output of the photogrammetry data processing thread 903 is continuously input to the UAV tasking module 1000, the logic of which begins by detecting changes in the sensed data, by comparing the currently-input photogrammetric output with the last-input photogrammetric output at step 1101. This step may be carried out by a relatively simple deterministic analysis, which filters out static information in the image data between successive frames, and so isolates changed information therein.

A question is accordingly asked at step 1102, about whether a change has been detected in the currently-input photogrammetric output. When the question of step 1102 is answered positively, then at step 1103 the UAV tasking module 1000 correlates the change in the sensed data with the stored mission datasets 1050_{1-N} and ranks the stored mission datasets 1050_{1-N} according to their respective correlation ratio, i.e. the UAV tasking module 1000 determines which stored mission dataset 1050_{1-N} is most closely associated with the new information detected in the image data. In the example, the change is a red car appearing in the sensed environment and thus in the corresponding image data, and this change is most closely correlated with a 'follow red car' stored mission dataset 1050 having an image of a red car 1040 within its second subset 373 at step 1103.

A question is then asked at step 1104, about whether any correlation ratio determined at step 1103 exceeds a predetermined threshold, indicative of a decision to update the mission dataset 810 of a connected UAV 200, thus wherein the threshold value indicates a close rather than distant correlation, e.g. 0.8 in the example.

When the question of step 1104 is answered positively, then at step 1105 the UAV tasking module 1000 causes the microprocessor 140 to encode a UAV-updating message 370 at the next instance of step 401, which includes the mission dataset 1050 having the highest-ranked correlation ratio, in the example the 'follow red car' mission dataset inclusive of a respective waypoint list 372 and the red car image 1040 by way of non-locational mission parameter 373. The logic of the UAV tasking module 1000 returns to step 1101 for a next comparison, whilst the UAV-updating message 370 is eventually communicated to the UAV at step 403, whence the UAV begins to fly according to the updated waypoint list and to sense the red car.

Alternatively, when the question of step 1104 is answered negatively, then a next question is asked at step 1106, about whether no correlation has been determined at step 1103, i.e. with no stored mission dataset 1050. When the question of step 1106 is answered positively, then at step 1107 the UAV tasking module 1000 instantiates a new mission dataset 1050_{N+1}, stores the uncorrelated sensed data therein as the second subset 373 and invokes the ML module logic 1010 to generate a waypoint list 372 based on the ruleset 1020, the UAV-specific parameters 1030 and the environment-specific parameters 1040.

When the question of earlier step 1102 is answered negatively, indicating that no change(s) were detected at step 1101, or when the question of step 1106 is answered negatively, indicating that the change(s) detected at step 1101 generated non-null but still low correlation ratios with stored mission datasets 1150_{1-N}, the UAV tasking module 1000 maintains the UAV's current mission dataset 810 at step 1106. The logic of the UAV tasking module 1000 then returns to step 1101 for a next comparison.

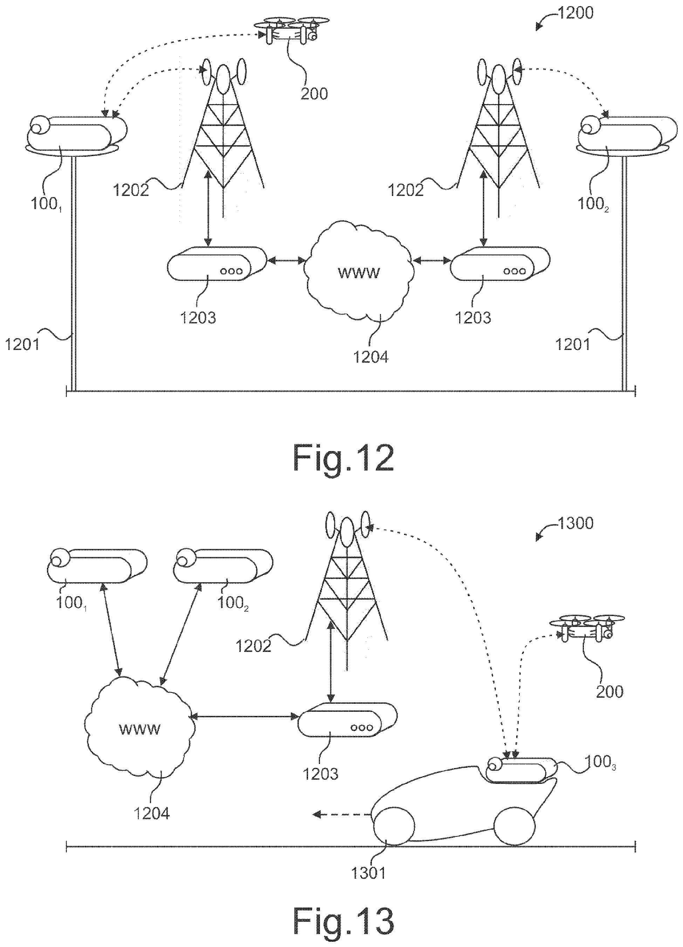

In order to extend the geographical span of the solution beyond the UAV flight range radiating from a single base station 100, with reference to Figures 12 to 15 now, the present invention usefully considers the combined use of several base stations networked with each other.

An example of a basic network 1200 consisting of two static base stations 100_{1,2} is shown in Figure 12 in a stylised urban environment, wherein each base station is mounted atop a respective street fixture 1201 and a distance between both base stations 100_{1,2} for instance exceeds the flight mid-range of a UAV 200 when departing from either base station but, in any case, never exceeds a maximum flight range the UAV 200 with a full power source 270 when departing from either base station.

The LPWAN network module 150 of each base station 100_{1,2} receives and emits alphanumerical, image and/or audio data encoded as digital signals over wireless data transmissions, wherein signals are relayed respectively to or from the network module by the geographically-closest communication link relay 1202 of a plurality thereof, in the example embodiment LoRaWAN gateways 1202. The plurality of communication link relays 1202 allows digital signals to be routed between each base station 100 and its communication target(s), in the example the UAV 200 and the other, remote base station, as respective signals are routed across the relays 1202. In the example still, a peer-to-peer communication mode is adopted by each LPWAN network module 150 for direct data communication between the base station and the UAV 200, and between the two base stations 100_{1,2}.

Each LoRaWAN gateway 1202 is in turn connected for bilateral data communication to a WAN router device 1203, which interfaces it with a Cloud service 1204 through a secure Internet Protocol connection, although the LoRaWAN gateway 1202 may be integral with the WAN router device 1203 so as to form a single WAN access point for a base station's LPWAN network module 150. Within the network 1200, data telecommunication is performed using the Internet Protocol (IP), Hypertext Transfer Protocol ('HTTP') or Secure Hypertext Transfer Protocol ('HTTPS').

In the network environment described in Figure 12 therefore, either or both base stations 100_{1,2} may communicate data with the or a respective UAV 200, both base stations 100_{1,2} may communicate data with each other, and both base stations 100_{1,2} may also communicate stored sensed data per step 310 with at least one other remote data processing terminal, for instance as part of, or connected to, the Cloud service 1204.

An example of a larger and modular network 1300 is shown in Figure 13, consisting of the two static base stations 100_{1,2} of the basic network 1200, and a third itinerant base station 100₃ temporarily or permanently secured to a rear upper surface of a travelling or stopped vehicle 1301, wherein the mains power input interface 130 of the third base station is connected to the electrical circuit of the vehicle 1301.

The LPWAN network module 150 of the itinerant base station 100₃ again receives and emits alphanumerical, image and/or audio data encoded as digital signals over wireless data transmissions, wherein signals are again relayed respectively to or from the network module by the geographically-closest communication link relay 1202, according to the location of the vehicle 1301 at the material time.

The plurality of communication link relays 1202 again allows digital signals to be routed between the itinerant base station 100₃ and its communication target(s), in the example the UAV 200 and the two static base stations 100_{1,2}, as respective signals are relayed across the relays 1202. The LPWAN network module 150 of the itinerant base station 100₃ again adopts a peer-to-peer communication mode for direct data communication across all three base stations 100₁₋₃.

In the network environment described in Figure 13 therefore, either or all three base stations 100₁₋₃ may communicate data with the or a respective UAV 200, all three base stations 100₁₋₃ may communicate data with each other, and all three base stations 100₁₋₃ may also communicate stored sensed data per step 310 with at least one other remote data processing terminal, for instance as part of, or connected to, the Cloud service 1204.

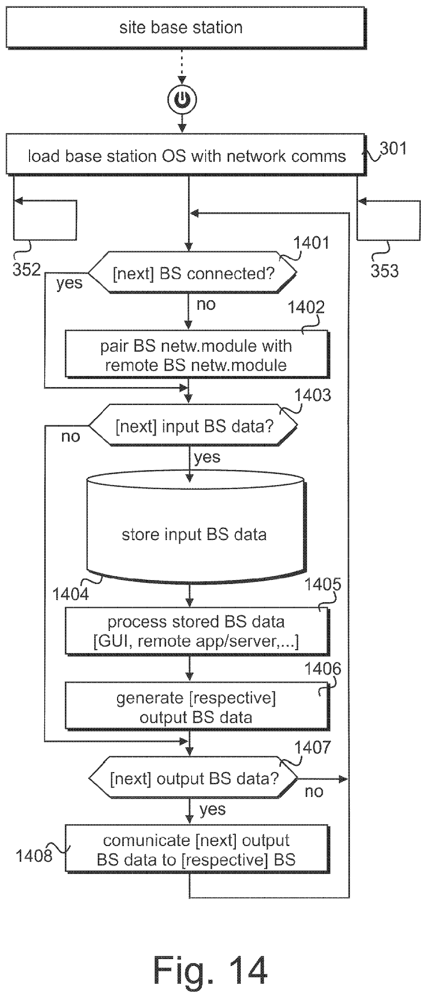

A simple embodiment of a data processing method performed by the microprocessor 140 of each base station 100_{1,2,3} in either of the networks 1200, 1300 at runtime is now described with reference to Figure 14, wherein a further base station interaction thread is initialised after completing the OS loading of step 301 and processed in parallel with the power management thread 352 and the UAV interaction thread 353.

In this base station interaction thread, a first question is asked at step 1401, about whether the LPWAN module 150 of the processing base station 100₁ is connected with the respective LPWAN module 150 of a first, or further, remote base station 100_{2,3}. This determination may be performed by periodically broadcasting a handshake signal across the network 1200, 1300, listening for handshake signals broadcast by remote base station(s) 100_{2,3} therein, and establishing a networking session with broadcasting remote base station(s) with which no network session yet exists.

When the question of step 1401 is answered negatively, at step 1402 the microprocessor 140 controls the LPWAN module 150 to establish a networked data connection with the first, or further, remote LPWAN module 150 detected, for receiving respective base station data therefrom according to the invention. The logic then proceeds to a next question at step 1403, likewise when the first question of step 1401 is answered positively instead, e.g. when a respective networked data connection exists for the or each detected remote network module 150 in the network 1200, 1300.

Question 1403 determines whether the LPWAN module 150 has received a next communication encoding base station data over a network connection, or not. This determination may be performed by querying the same network input buffer 357 organised under a first-in first-out principle, in which incoming network messages from remote base stations 100_{2,3} are also stored as soon as received by the LPWAN module 150. This approach is again merely illustrative, and may be either dispensed with, or still remain within the timespan of a substantially real-time performance, subject to the data processing capacities of, and the network latency between, the base stations 100₁₋₃.

When the question of step 1403 is answered positively, the microprocessor 140 decodes the remote base station network message and stores the decoded base station data in the memory 145 at step 1404. The base station data comprises both base station status data, including at least power level in the remote base station battery 170 and data representative of the remote base station location (811, 1201) in the environment, and base station sensor data, including in this example digital image data 360 captured by the remote base station optical sensor 120 or the sensor arrangement 203 of a UAV connected to the remote base station 100_{2,3}.

The next step is shared with the UAV interaction thread 353 and consists in the microprocessor 140 again processing the stored data 358, in this embodiment including the remote base station data received at step 1403, according to environmental monitoring principles and purposes, for instance it forwards some or all of the stored UAV and remote base station data to a remote data processing terminal or server 1204 through the LPWAN module 150.

After the data processing step 310, or as a sub-step thereof, the microprocessor 1400 generates an output network message for a respective remote base station 100_{2,3} to which it is connected at step 1406. In an embodiment, the output network message generated at step 1406 may encode an instruction to the remote base station 100_{2,3} to register itself at step 307, with a UAV 200 that is currently connected to the local base station 100, effectively handing control of that UAV over to that remote base station once it become that UAV's reference base station. Step 1406 comprises sub-steps embodying a determinitive logic to decide the example handover, for instance based on the remote base station location and battery level data stored at step 1404, and the UAV status data 358 stored at step 309.

Network messages encoding commands are either communicated immediately to a remote base station 100_{2,3} for purposes of operational expediency, or output to the same network output buffer 370 as for UAV-addressed messages, again for purposes of parallel data processing optimisation.

Accordingly, when the question of step 1403 is answered negatively, a question is then immediately asked at step 1407, about whether there is any outgoing network message to a remote base station 100_{2,3} waiting to be sent. When the question of step 1407 is answered positively, the microprocessor 140 controls the LPWAN module 150 to communicate the network message to the target remote base station 100_{2,3} at step 1408. Control subsequently loops back to the question of step 1401 in this base station interaction thread, likewise when the question of step 1407 is answered negatively.

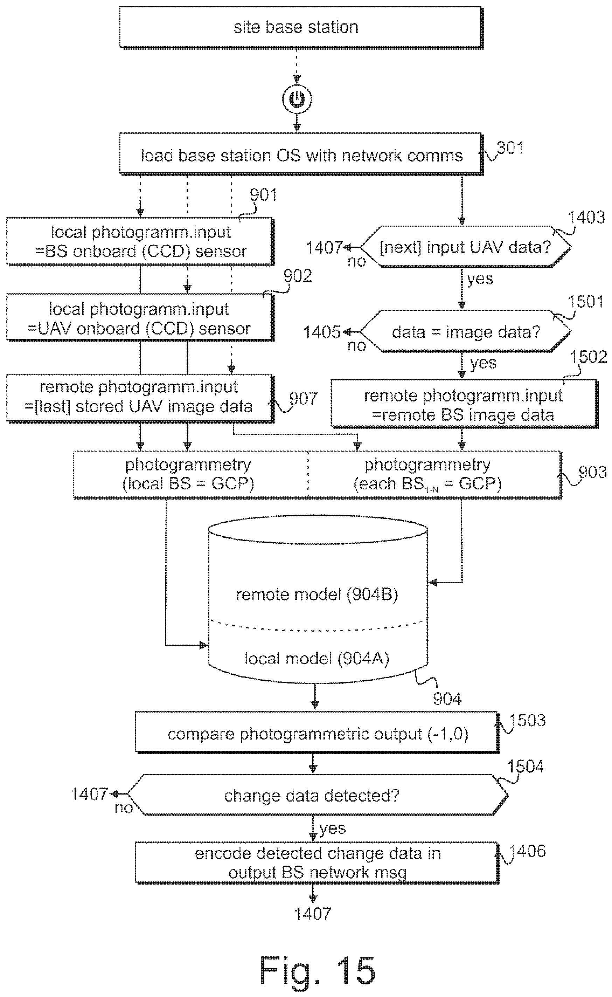

An alternative data processing method performed by the microprocessor 140 of each base station 100_{1,2,3} in either of the networks 1200, 1300 at runtime is now described with reference to Figure 15, wherein the base station interaction thread is interfaced with the digital model generating method described with reference to Figure 9, and wherein output network messages for remote base stations 100_{2,3} generated by the microprocessor 1400 at step 1406 encode, in this embodiment, at least a portion of the local base station's digital model.

When the question of step 1403 is answered positively, indicating that a base station network message has been received, then besides storing the base station data decoded therefrom at step 1404, a further question is asked at step 1501, about whether the base station sensor data 360 therein includes digital image data. When the question of step 1501 is answered negatively, the logic proceeds to step 1407 as previously described. Alternatively, when the question of step 1501 is answered positively, then the microprocessor 140 selects the digital image data 360 last stored at step 1404, as the data input source for the photogrammetry thread at step 1502.

The photogrammetry data processing thread is continuously processed at step 903 as before, in parallel with the power management thread 352, the UAV interaction thread 353 and the base station interaction thread, and processes image data input to it according to the selections of steps 901, 902, 907 and 1502, into a digital model 904 of selective or homogenised granularity. The model 904 still combines a local model 904A of the environment locally observable from the base station 100 according to the image data source selected at steps 901, 902, and a remote model 904B of the environment remotely observable, in this embodiment, either by a UAV 200 in flight according to the image data source selected at step 907, or by the sensor of a remote base station 100_{2,3} or by a UAV 200 in flight and connected to a remote base station 100_{2,3}, in all instances using a base station's landing surface 105 by way of GCP.

At a next step 1503, the microprocessor 140, or the ML module 1000 if present, compares the photogrammetric output from step 903 with the previous photogrammetric output, for the local environmental model 904A. A question is then asked at step 1504, about whether a change has been detected in the current photogrammetric output. When the question of step 1102 is answered positively, then at step 1406 the microprocessor 140 encodes the detected change data in its local model, in the output network message for the, or each, remote base station 100_{2,3}. Alternatively, the question of step 1504 is answered negatively, wherein the logic proceeds to step 1407.

For purposes of maintaining as homogeneous a combined model as possible at each base station 100_{1-N} within a network 1200, 1300,, and considering the peer-to-peer communication mode of the example, the target base station 100_{2,3} of the network message encoding output at step 1406 is preferably prioritised as either the most geographically proximate base station, based on distances computed from the base stations' respective locations received in the base station status data stored at previous instances of step 1404; or, chronologically, the last autonomous base station that connected to the network, computed from durations of network sessions established at previous instances of step 1402.

The invention is not limited to the embodiments hereinbefore described but may be varied in both construction and detail.

For example, it will be readily understood by skilled persons, that the UAV tasking module 1000, its characteristics and its functionalities, were described by way of non-limitative example only, and that same may be implemented as a subset of instructions and data structures integrally stored in the memory 145 and processed by the microprocessor 140 in the base station architecture shown in Figure 1 instead.

It will likewise be readily understood by skilled persons, that at least some of the data processing methods performed at the or each base station 100, in particular those requiring non-trivial resources such as digital modelling of the sensed environment, detecting of changes in the sense environment and generating new mission datasets, may be delegated to a remote server or group thereof having more substantial data processing capacities than those of the base station, or even group thereof in a network 1200.

Alternatively, or complementarily, with reference to networks 1200, 1300 of base stations 100_{1-N}, the modelling of the sensed environment, the detecting of changes in the sensed environment and the generating of new mission datasets may be distributed across connected nodes of the network according to data processing and/or bandwidth load-balancing principles, in order reduce redundant data transfers therebetween.

Alternatively still, subject to the data processing and storage capacities of a UAV, the onboard microprocessor 240 may be configured by the OS 801, and instructions subsets thereof, to implement the digital environment modelling of step 903 locally at the UAV based on the sensed data from the sensor arrangement 203 and update its digital environment model over time, to detect changes therein according to step 1101, and to communicate all or only the updated portion of its local onboard model to either or both of a base station 100 and another UAV 200.

Moreover, the onboard microprocessor 240 may be further configured by the OS 801, and instructions subsets thereof, to implement the mission dataset correlation of step 1103 and self-select an alternative dataset 1050 at step 1105 or maintain the current mission dataset 810 at step 1107, whereby the UAV flight controller 803 is controlled according to sensed environment data 809 and changes therein.

In this last context, the logic of steps 1101 to 1108 may be distributed for collaborative performance by the base stations 100_{1-N} and/or the UAVs 200, wherein the mission datasets 1050_{1-N} provide a learning corpus input to one or more UAV tasking modules 1010, and wherein the or each UAV tasking module 1010 is configured to, upon detecting a change at step 1102, segregate mission waypoints 372 and mission parameters 373 between a plurality of UAVs 200 according to the location of each base station 100 referenced by a respective UAV 200. In this case, either the best-correlated mission dataset at step 1105, or the new mission dataset generated at step 1107, is a collaborative mission spanning potentially the entire network 1200, 1300 and consisting of discrete objectives, in terms of e.g. navigational data and monitoring parameters, respectively assigned to several UAVs.

In the above embodiment, the example mission of sensing and monitoring a red car previously described with reference to Figure 11, is still detected as the mission dataset 1050 with the highest correlation ratio at step 1103 and again triggers a mission updating decision at step 1104. However, at step 1105 the UAV tasking module 1000 now causes the microprocessor 140 to encode a UAV-updating message 370 addressed to other base stations 100_{2,3} in the network at the next instance of step 1406, still including the 'follow red car' mission dataset inclusive of a waypoint list 372, the red car image 1040 by way of non-locational mission parameter 373, and again an instruction to the remote base station 100_{2,3} to register itself at the next local step 307, with the UAV 200 that is currently connected to the local base station 100. This advantageously allows each recipient remote base station 100_{2,3} to take control of the UAV 200 if and when needed, based on the UAV's autonomy and its communication range relative to either, whilst that UAV continues to sense and follow the red car, and then to task another UAV for which it is the reference base station at a local instance of step 1105, if the original UAV 200 lands locally for charging its battery.

It will also be readily understood by skilled persons, that the power coupling between the base station power transfer bus 110 and the UAV internal battery 270, described herein as a set of anode 101₂ and cathode 101₂ complementing electrically-conducting landing skids 204₁₋₂ of the UAV 200, may be implemented in many different ways, including a static or gimballed cylindrical jack or USB connector complementing a variety of standardised UAV electrical charging sockets, advantageously permitting the use of legacy drones, suitably programmed according to the UAV operating logic herein, with the autonomous base station of the invention.

Alternatively, the base station power transfer bus 110 may be implemented as a substantially weatherproof housing for a UAV battery 270 within, or projecting from, the base station body 101 and on or proximate the landing surface 105, the housing having electrical connectors interfaced to the power supply bus 165 and suitable for charging a spare UAV battery 270 therein, and an electro-mechanical arrangement likewise interfaced to the power supply bus 165 and adapted to remove a depleted UAV battery 270 from a UAV 200 whilst stationary on the landing surface 105, replace it with the charged spare UAV battery 270 from the housing, and house the depleted UAV battery 270 in the housing for charging same.

More generally, it will be readily understood by skilled persons that the inventive principles disclosed herein in relation to hardware architectures and/or components and/or their arrangement may be permanently integrated into the standard configuration of a microprocessor through relevant manufacturing techniques.

In the specification the terms "comprise, comprises, comprised and comprising" or any variation thereof and the terms include, includes, included and including" or any variation thereof are considered to be totally interchangeable and they should all be afforded the widest possible interpretation and vice versa.

## Claims

1. An autonomous base station (100) for unmanned aerial vehicles ('UAVs'), comprising-
at least one landing surface (105) for at least one UAV (200), configured with at least one power transfer bus (110) for supplying power to a power source of the unmanned aerial vehicle ;
at least one networking module (150);
data processing means (140, 240) operably connected to, and configured to control, the or each power transfer bus (110) and the or each networking module (150),
wherein the data processing means (140, 240) is further operably connected to the or each UAV (200) through the at least one networking module (150), and is further configured to receive, store and process data from the or each UAV (200) and to communicate data, comprising control data, to the or each UAV (200), to process stored data into a digital model (904) of an environment external to the autonomous base station (100) and to detect changes in the external environment by comparing received data with the digital model (904) and to update the model according to detected changes;
a power supply operably connected to the or each power transfer bus (110), the or each networking module (150) and the data processing means (140, 240), and
wherein the base station (100) further comprises a UAV tasking module (1000) storing a plurality of datasets each representative of a UAV mission, the data processing means (140, 240) is further configured to input detected change data to the UAV tasking module (1000), and the UAV tasking module (1000) is configured to correlate the detected change data with the stored datasets and determine respective correlation results and wherein the UAV tasking module (1000) is further configured to
communicate the dataset having a highest correlation result, and optionally some or all of the detected change data correlated therewith, to a local or remote UAV (200) through the networking module (150); and
when a low correlation result or none is determined, generate a new dataset representative of a new mission and associate the uncorrelated detected change data therewith.

2. A base station according to claim 1, further comprising at least one sensor (120, 203) operably connected to the data processing means (140, 240), wherein the data processing means (140, 240) is further configured to receive, store and process data from the or each sensor (120, 203); and
wherein the or each sensor (120, 203) is selected from the group comprising optical, acoustic, infrared, ultrasonic and microwave sensors.

3. A base station according to claim 1, wherein each stored dataset comprises at least a set of flight control parameters for the UAV (200).

4. A base station according to claim 1 or 3, wherein the UAV tasking module (1000) is further configured to monitor processing, remotely at the UAV (200), of a dataset communicated thereto.

5. A base station according to any of claims 1 to 4, wherein the networking module (150) is configurable by the data processing means (140, 240) for bilateral data communication with at least one other autonomous base station for UAVs and/or at least one other data processing terminal remote from the or either base station.

6. A network of autonomous base stations for unmanned aerial vehicles ('UAVs'), comprising at least two base stations according to any of claims 1 to 5.

7. A network according to claim 6, wherein the data processing means (140, 240) further configures the networking module (150) of each autonomous base station as a relay for data received from, and/or emitted to, one or more UAVs.

8. A network according to claim 6 or 7 wherein, when the respective data processing means (140, 240) of each autonomous base station is further configured to process stored data into a digital model (904) of an environment external thereto, said respective data processing means (140, 240) is further configured to send at least a portion of its digital model data to one or more other autonomous base station(s), and to append received digital model data to its digital model (904).

9. A network according to claim 8, wherein the or each other autonomous base station is the most geographically proximate autonomous base station or wherein the one other autonomous base station is chronologically the last autonomous base station to connect to the network.

10. A network according to any of claims 6 to 9, wherein a longest distance between any two base stations in the network is never more than a maximum range of travel of a UAV configured with a full power source.

11. A system comprising an autonomous base station according to claim 1 and an unmanned aerial vehicle ('UAV') for use with the autonomous base station, or with the network thereof according to any of claims 6 to 10, the UAV comprising-
flight powering means;
at least one optical sensor (120) for sensing environment data;
at least one wireless communications module;
data processing means (140, 240) operably connected to, and configured to control, the flight powering means, the optical sensor (120) and the communications module; and
a power source operably connected to the flight powering means, the optical sensor (120), the communications module and the data processing means (140, 240).

12. A system according to claim 11, wherein the data processing means (140, 240) is further configured to-
store and process data sensed by the or each sensor,
communicate the stored and/or processed data to the or each autonomous base station, and process the stored data into a local digital model of an environment sensed by at least the optical sensor (120), and
optionally detect changes in the environment by comparing sensed data with the local digital model, and to update the local digital model according to detected changes.

13. A system according to claim 12, wherein the data processing means (140, 240) is further configured to communicate at least a portion of the local digital model data to one or more other UAV(s), and to append received digital model data to the local digital model ; and optionally wherein the data processing means (140, 240) is further configured -
to monitor a location and/or altitude and/or velocity of the UAV in the environment in real-time,
to determine a virtual location of the UAV in the local digital model according to the real-time location and/or altitude and/or velocity data, and
to control the flight powering means according to at least one selected from the sensed environment data, the determined virtual location and the detected changes.

## Patentansprüche

1. Autonome Basisstation (100) für unbemannte Luftfahrzeuge (UAVs), umfassend mindestens eine Landefläche (105) für mindestens ein UAV (200), die mit mindestens einem Leistungsübertragungsbus (110) zum Versorgen einer Leistungsquelle des unbemannten Luftfahrzeugs mit Leistung konfiguriert ist;
mindestens ein Netzwerkmodul (150);
Datenverarbeitungsmittel (140, 240), die betriebsmäßig mit dem oder jedem Leistungsübertragungsbus (110) und dem oder jedem Netzwerkmodul (150) verbunden und zu deren Steuerung konfiguriert sind,
wobei die Datenverarbeitungsmittel (140, 240) weiter durch das mindestens eine Netzwerkmodul (150) betriebsmäßig mit dem oder jedem UAV (200) verbunden sind und weiter dazu konfiguriert sind, Daten von dem oder jedem UAV (200) zu empfangen, zu speichern und zu verarbeiten und Daten, umfassend Steuerdaten, an das oder jedes UAV (200) zu kommunizieren, gespeicherte Daten zu einem digitalen Modell (904) einer Umgebung außerhalb der autonomen Basisstation (100) zu verarbeiten und Änderungen in der äußeren Umgebung zu erfassen, indem sie empfangene Daten mit dem digitalen Modell (904) vergleichen, und das Modell gemäß den erfassten Änderungen zu aktualisieren;
eine Leistungsversorgung, die betriebsmäßig mit dem oder jedem Leistungsübertragungsbus (110), dem oder jedem Netzwerkmodul (150) und den Datenverarbeitungsmitteln (140, 240) verbunden ist, und
wobei die Basisstation (100) weiter ein UAV-Aufgabenzuteilungsmodul (1000) umfasst, das eine Vielzahl von Datensätzen speichert, die jeweils eine UAV-Mission darstellen, wobei die Datenverarbeitungsmittel (140, 240) weiter dazu konfiguriert sind, erfasste Änderungsdaten in das UAV-Aufgabenzuteilungsmodul (1000) einzugeben, und wobei das UAV-Aufgabenzuteilungsmodul (1000) dazu konfiguriert ist, die erfassten Änderungsdaten mit den gespeicherten Datensätzen zu korrelieren und jeweilige Korrelationsergebnisse zu bestimmen, und wobei das UAV-Aufgabenzuteilungsmodul (1000) weiter dazu konfiguriert ist,
den Datensatz, der ein höchstes Korrelationsergebnis aufweist, und optional einige oder alle der damit korrelierten erfassten Änderungsdaten durch das Netzwerkmodul (150) an ein lokales oder entferntes UAV (200) zu kommunizieren; und
wenn ein geringes oder kein Korrelationsergebnis bestimmt wird, einen neuen Datensatz zu erzeugen, der eine neue Mission darstellt, und die unkorrelierten erfassten Änderungsdaten damit zu verknüpfen.

2. Basisstation nach Anspruch 1, die weiter mindestens einen Sensor (120, 203) umfasst, der betriebsmäßig mit den Datenverarbeitungsmitteln (140, 240) verbunden ist, wobei die Datenverarbeitungsmittel (140, 240) weiter dazu konfiguriert sind, Daten von dem oder jedem Sensor (120, 203) zu empfangen, zu speichern und zu verarbeiten; und
wobei der oder jeder Sensor (120, 203) aus der Gruppe ausgewählt ist, die optische, akustische, Infrarot-, Ultraschall- und Mikrowellensensoren umfasst.

3. Basisstation nach Anspruch 1, wobei jeder gespeicherte Datensatz mindestens einen Satz von Flugsteuerungsparametern für das UAV (200) umfasst.

4. Basisstation nach Anspruch 1 oder 3, wobei das UAV-Aufgabenzuteilungsmodul (1000) weiter dazu konfiguriert ist, Verarbeitung, aus der Ferne beim UAV (200), eines dorthin kommunizierten Datensatzes zu überwachen.

5. Basisstation nach einem der Ansprüche 1 bis 4, wobei das Netzwerkmodul (150) durch die Datenverarbeitungsmittel (140, 240) für gegenseitige Datenkommunikation mit mindestens einer anderen autonomen Basisstation für UAVs und/oder mindestens einem anderen Datenverarbeitungsendgerät, das fernab der oder beider Basisstationen ist, konfigurierbar ist.

6. Netzwerk autonomer Basisstationen für unbemannte Luftfahrzeuge ('UAVs'), das mindestens zwei Basisstationen nach einem der Ansprüche 1 bis 5 umfasst.

7. Netzwerk nach Anspruch 6, wobei die Datenverarbeitungsmittel (140, 240) weiter das Netzwerkmodul (150) jeder autonomen Basisstation als ein Relais für Daten konfiguriert, die von einem oder mehreren UAVs empfangen und/oder an diese(s) ausgesendet werden.

8. Netzwerk nach Anspruch 6 oder 7, wobei, wenn die jeweiligen Datenverarbeitungsmittel (140, 240) jeder autonomen Basisstation weiter dazu konfiguriert sind, gespeicherte Daten zu einem digitalen Modell (904) einer Umgebung außerhalb davon zu verarbeiten, die jeweiligen Datenverarbeitungsmittel (140, 240) weiter dazu konfiguriert sind, mindestens einen Teil ihrer digitalen Modelldaten an eine oder mehrere andere autonome Basisstationen zu senden und empfangene digitale Modelldaten an ihr digitales Modell (904) anzuhängen.

9. Netzwerk nach Anspruch 8, wobei die oder jede andere autonome Basisstation die geographisch nächstgelegene autonome Basisstation ist, oder wobei die eine andere autonome Basisstation die zeitlich letzte autonome Basisstation ist, die sich mit dem Netzwerk verbindet.

10. Netzwerk nach einem der Ansprüche 6 bis 9, wobei eine längste Entfernung zwischen zwei beliebigen Basisstationen im Netzwerk nie größer als eine maximale Reichweite eines UAV ist, das mit einer vollen Leistungsquelle konfiguriert ist.

11. System, das eine autonome Basisstation nach Anspruch 1 und ein unbemanntes Luftfahrzeug ('UAV') zur Verwendung mit der autonomen Basisstation oder mit deren Netzwerk nach einem der Ansprüche 6 bis 10 umfasst, wobei das UAV Folgendes umfasst-
Flugantriebsmittel;
mindestens einen optischen Sensor (120) zum Erfassen von Umgebungsdaten; mindestens ein drahtloses Kommunikationsmodul;
Datenverarbeitungsmittel (140, 240), die betriebsmäßig mit den Flugantriebsmitteln, dem optischen Sensor (120) und dem Kommunikationsmodul verbunden und für deren Steuerung konfiguriert sind; und
eine Leistungsquelle, die betriebsmäßig mit den Flugantriebsmitteln, dem optischen Sensor (120), dem Kommunikationsmodul und den Datenverarbeitungsmitteln (140, 240) verbunden ist.

12. System nach Anspruch 11, wobei die Datenverarbeitungsmittel (140, 240) weiter für Folgendes konfiguriert sind-
Speichern und Verarbeiten der von dem oder jedem Sensor erfassten Daten,
Kommunizieren der gespeicherten und/oder verarbeiteten Daten an die oder jede autonome Basisstation und Verarbeiten der gespeicherten Daten zu einem lokalen digitalen Modell einer Umgebung, die mindestens von dem optischen Sensor (120) erfasst wird, und
optional Erfassen von Änderungen in der Umgebung durch Vergleichen erfasster Daten mit dem lokalen digitalen Modell und Aktualisieren des lokalen digitalen Modells gemäß den erfassten Änderungen.

13. System nach Anspruch 12, wobei die Datenverarbeitungsmittel (140, 240) weiter dazu konfiguriert sind, mindesten einen Teil der lokalen digitalen Modelldaten an ein oder mehrere andere UAV(s) zu kommunizieren und empfangene digitale Modelldaten an das lokale digitale Modell anzuhängen; und wobei die Datenverarbeitungsmittel (140, 240) optional weiter für Folgendes konfiguriert sind-
Überwachen eines Standorts und/oder einer Höhe und/oder Geschwindigkeit des UAV in der Umgebung in Echtzeit,
Bestimmen eines virtuellen Standorts des UAV im lokalen digitalen Modell gemäß den Standorts- und/oder Höhen- und/oder Geschwindigkeitsechtzeitdaten, und
Steuern der Flugantriebsmittel gemäß mindestens einem ausgewählt aus den erfassten Umgebungsdaten, dem bestimmten virtuellen Standort und den erfassten Änderungen.

## Revendications

1. Station de base autonome (100) pour véhicules aériens sans pilote (« UAV »), comprenant au moins une surface d'atterrissage (105) pour au moins un UAV (200), configurée avec au moins un bus de transfert de puissance (110) pour fournir de la puissance à une source de puissance du véhicule aérien sans pilote ;
au moins un module de mise en réseau (150) ;
des moyens de traitement de données (140, 240) connectés de manière opérationnelle à et configurés pour commander le ou chaque bus de transfert de puissance (110) et le ou chaque module de mise en réseau (150),
dans lequel les moyens de traitement de données (140, 240) sont en outre connectés de manière opérationnelle au ou à chaque UAV (200) par l'intermédiaire de l'au moins un module de mise en réseau (150) et sont en outre configurés pour recevoir, stocker et traiter des données provenant du ou de chaque UAV (200) et pour communiquer des données, y compris des données de commande, au ou à chaque UAV (200), pour traiter les données stockées dans un modèle numérique (904) d'un environnement externe à la station de base autonome (100) et pour détecter des changements dans l'environnement externe en comparant des données reçues avec le modèle numérique (904) et pour mettre à jour le modèle en fonction des changements détectés ;
une alimentation de puissance connectée de manière opérationnelle au ou à chaque bus de transfert de puissance (110), au ou à chaque module de mise en réseau (150) et aux moyens de traitement de données (140, 240), et
dans laquelle la station de base (100) comprend en outre un module d'attribution de tâche d'UAV (1000) stockant une pluralité d'ensembles de données, chacun étant représentatif d'une mission d'UAV, les moyens de traitement de données (140, 240) sont en outre configurés pour entrer des données de changement détecté dans le module d'attribution de tâche d'UAV (1000), et le module d'attribution de tâche d'UAV (1000) est configuré pour corréler les données de changement détecté avec les ensembles de données stockés et déterminer des résultats de corrélation respectifs, et dans laquelle le module d'attribution de tâche d'UAV (1000) est en outre configuré pour
communiquer l'ensemble de données présentant le résultat de corrélation le plus élevé, et facultativement une partie ou la totalité des données de changement détecté corrélées avec celui-ci, à un UAV local ou distant (200) via le module de mise en réseau (150) ; et
lorsqu'un résultat de corrélation faible ou nul est déterminé, générer un nouvel ensemble de données représentatif d'une nouvelle mission et y associer les données de changement détecté non corrélées.

2. Station de base selon la revendication 1, comprenant en outre au moins un capteur (120, 203) connecté de manière opérationnelle aux moyens de traitement de données (140, 240), dans laquelle les moyens de traitement de données (140, 240) sont en outre configurés pour recevoir, stocker et traiter les données provenant du ou de chaque capteur (120, 203) ; et
dans lequel le ou chaque capteur (120, 203) est sélectionné dans le groupe comprenant des capteurs optiques, acoustiques, infrarouges, ultrasonores et à micro-ondes.

3. Station de base selon la revendication 1, dans laquelle chaque ensemble de données stocké comprend au moins un ensemble de paramètres de commande de vol pour l'UAV (200).

4. Station de base selon la revendication 1 ou 3, dans laquelle le module d'attribution de tâche d'UAV (1000) est en outre configuré pour surveiller le traitement, à distance au niveau de l'UAV (200), d'un ensemble de données qui lui est communiqué.

5. Station de base selon l'une quelconque des revendications 1 à 4, dans laquelle le module de mise en réseau (150) est configurable par les moyens de traitement de données (140, 240) pour une communication de données bilatérale avec au moins une autre station de base autonome pour des UAV et/ou au moins un autre terminal de traitement de données distant de la ou d'une station de base.

6. Réseau de stations de base autonomes pour véhicules aériens sans pilote (« UAV »), comprenant au moins deux stations de base selon l'une quelconque des revendications 1 à 5.

7. Réseau selon la revendication 6, dans lequel les moyens de traitement de données (140, 240) configurent en outre le module de mise en réseau (150) de chaque station de base autonome sous la forme d'un relais pour des données reçues de et/ou émises vers un ou plusieurs UAV.

8. Réseau selon la revendication 6 ou 7 dans lequel, lorsque les moyens de traitement de données respectifs (140, 240) de chaque station de base autonome sont en outre configurés pour traiter des données stockées dans un modèle numérique (904) d'un environnement qui lui est externe, lesdits moyens de traitement de données respectifs (140, 240) sont en outre configurés pour envoyer au moins une partie de leurs données de modèle numérique à une ou plusieurs autres stations de base autonomes et pour ajouter des données de modèle numérique reçues à leur modèle numérique (904).

9. Réseau selon la revendication 8, dans lequel la ou chaque autre station de base autonome est la station de base autonome la plus proche géographiquement ou dans lequel l'autre station de base autonome est chronologiquement la dernière station de base autonome à se connecter au réseau.

10. Réseau selon l'une quelconque des revendications 6 à 9, dans lequel la distance la plus longue entre deux stations de base quelconques du réseau n'est jamais supérieure à une plage de déplacement maximale d'un UAV configuré avec une source puissance complète.

11. Système comprenant une station de base autonome selon la revendication 1 et un véhicule aérien sans pilote (« UAV ») destiné à être utilisé avec la station de base autonome, ou avec le réseau de celle-ci selon l'une quelconque des revendications 6 à 10, l'UAV comprenant :
des moyens de propulsion de vol ;
au moins un capteur optique (120) pour détecter des données environnementales ;
au moins un module de communication sans fil ;
des moyens de traitement de données (140, 240) connectés de manière opérationnelle, et configurés pour les commander, aux moyens de propulsion de vol, au capteur optique (120) et au module de communication ; et
une source de puissance connectée de manière opérationnelle aux moyens de propulsion de vol, au capteur optique (120), au module de communication et aux moyens de traitement de données (140, 240).

12. Système selon la revendication 11, dans lequel les moyens de traitement de données (140, 240) sont en outre configurés pour :
stocker et traiter des données détectées par le ou chaque capteur,
communiquer les données stockées et/ou traitées à la ou à chaque station de base autonome et traiter les données stockées dans un modèle numérique local d'un environnement détecté par au moins le capteur optique (120), et
détecter facultativement des changements dans l'environnement en comparant des données détectées avec le modèle numérique local et mettre à jour le modèle numérique local en fonction des changements détectés.

13. Système selon la revendication 12, dans lequel les moyens de traitement de données (140, 240) sont en outre configurés pour communiquer au moins une partie des données de modèle numérique local à un ou plusieurs autres UAV et pour ajouter des données du modèle numérique reçues au modèle numérique local ; et facultativement dans lequel les moyens de traitement de données (140, 240) sont en outre configurés pour :
surveiller un emplacement et/ou une altitude et/ou une vitesse de l'UAV dans l'environnement en temps réel,
déterminer un emplacement virtuel de l'UAV dans le modèle numérique local en fonction de des données d'emplacement et/ou d'altitude et/ou de vitesse en temps réel, et
commander les moyens de propulsion de vol en fonction d'au moins un sélectionné parmi les données environnementales détectées, l'emplacement virtuel déterminé et les changements détectés.
